# EUROPÄISCHE PATENTSCHRIFT

(11) **EP 2 727 724 B1**
(45) Veröffentlichungstag und Bekanntmachung des Hinweises auf die Patenterteilung: **02.12.2020**
(21) Anmeldenummer: 13188976.8
(22) Anmeldetag: 16.10.2013
(51) Int. Cl.: B32B 27/32, B32B 27/36, C08J 5/18

(54) **EIN- ODER MEHRSCHICHTIGE FOLIE**
SINGLE OR MULTIPLE LAYER FILM
FEUILLE À UNE OU PLUSIEURS COUCHES

(30) Priorität: 25.10.2012 DE 102012110220
(43) Veröffentlichungstag der Anmeldung: 07.05.2014
(73) Patentinhaber: Buergofol GmbH, 93354 Siegenburg (DE)
(72) Erfinder: Schleicher, Gregor, 85049 Ingolstadt (DE); Boutrid, Abdel-Kader, 93345 Siegenburg (DE); Stark, Kurt, 91284 Neuhaus a.d. Pegnitz (DE); Schleicher, Franz, 85053 Ingolstadt (DE)
(74) Vertreter: Schlief, Thomas P.

(56) Entgegenhaltungen:
- WO-A1-2009/084518
- GB-A- 2 172 601
- US-A- 3 944 699

## Beschreibung

Die Erfindung betrifft eine ein- oder mehrschichtige Folie, wobei die Folie zwei Außenschichten und mindestens eine innenliegende Schicht umfasst, die mindestens ein thermoplastisches Olefin-Homo- oder Copolymer aus der Gruppe umfassend Polyethylen, insbesondere LDPE oder HDPE, Polypropylen, Polybutylen, Polyisobutylen oder Mischungen aus wenigstens zwei der genannten Polymere und mindestens ein Polyester enthält.

Derartige Folien sind bekannt. Produkte aus beispielsweise Polyethylen (PE) und insbesondere solche mit niedriger Dichte (LDPE - Low Density Polyethylene) sind beispielsweise Müllsäcke, Schrumpffolien und Landwirtschaftsfolien. Auch sind zahlreiche Mehrschichtfolien bekannt, welche beispielsweise drei, fünf oder sieben Schichten aufweisen, von denen eine oder mehrere beispielsweise PE oder PP (Polypropylen) enthalten.

Allgemein kann gesagt werden, dass der Anwendungsbereich von Folien mit Olefin-Homo- oder Copolymeren sehr groß ist. Zu den Einsatzgebieten gehört auch das Schlauchlining-Verfahren für die grabenlose Kanalrohrsanierung. Hier ist es beispielsweise beim System Glasfaser-Schlauchliner mit UV- oder Dampfhärtung bekannt, in das zu sanierende Rohr eine dickwandige Folie aus PE mit einer hohen Dichte (HDPE - High Density Polyethylene) einzubringen, welche - zumeist in der Querschnittsform eines Halbkreises - an der Innenwand des Rohres angelegt wird. Anschließend wird ein flexibler Einlegeschlauch (auch Schlauchliner oder lediglich Liner genannt) in das zu sanierende Rohr eingezogen (Einzugsverfahren), wobei der Einlegeschlauch über die Gleitfolie gleitet. Hierdurch wird einerseits eine Beschädigung des Einlegeschlauchs durch die Rohrinnenwand bzw. Gegenstände im Rohr vermieden, andererseits ist die Reibung zwischen Einlegeschlauch und Gleitfolie sehr niedrig und erleichtert ein Einziehen des Einlegeschlauchs. Diese Funktionsweise ähnelt derjenigen eines Schuhlöffels. Ein derartiger Einlegeschlauch (Schlauchliner) weist beim System Glasfaser-Schlauchliner mit UV-oder Dampfhärtung üblicherweise einen inneren und einen äußeren Schlauch auf, zwischen denen ein Trägermaterial (beispielsweise Glasfasern) eingebracht ist, welches mit reaktivem Kunststoffharz getränkt ist. Als reaktives Kunststoffharz kommen zum Beispiel handelsübliche UP-Harze (Polyester- bzw. ungesättigte Polyesterharze), VE-Harze (Vinylesterharze) oder EP-Harze (Epoxid-Harze) zum Einsatz. Die Härtung der Harze erfolgt bei UP- oder VE-Harzen zum Beispiel mit Hilfe von Photoinitiatoren. Die Härtung kann aber auch thermisch erfolgen. Der Einlegeschlauch wird im Rohr solange aufgeblasen, bis er an der Rohrinnenwand bzw. der Gleitfolie anliegt, um anschließend das Harz - beispielsweise mittels UV-Licht aus einer langsam durch das Rohr gezogenen UV-Lichtquelle - auszuhärten. Zum Schluss wird die innere Folie des Einlegeschlauchs abgezogen und entfernt. Die Schicht mit dem Trägermaterial ist dann den durch das Rohr zu leitenden Substanzen exponiert.

Anstelle der oben beschriebenen Gleitfolie wird oft - insbesondere beim System Synthesefaser-Schlauchliner mit Warmwasser- oder Dampfhärtung - ein Preliner (auch Preliner-Folie genannt) in das zu sanierende Rohr eingebracht. Ein Preliner, der üblicherweise aus PE mit einer hohen Dichte (HDPE - High Density Polyethylene) besteht, ist eine dickwandige, das Rohr vollständig auskleidende Folie, die ebenfalls einen direkten Kontakt des Schlauchliners mit der Rohrinnenwand verhindert. Hierzu wird der Preliner direkt an der Innenwand des Rohres angelegt. Anschließend wird der Schlauchliner in das Rohr eingezogen (Einzugsverfahren) oder invertiert (Inversionsverfahren). Der Preliner verhindert zum Beispiel eine Verklebung des Kunstharzes des Schlauchliners mit der Kanalwand und einen Kontakt des noch nicht gehärteten Harzes mit Schmutz und Wasser. Ferner verhindert die Preliner-Folie auch das Austreten von Harz aus dem Kanalsanierungssystem sowie die Kontamination von Erdreich und Grundwasser. Durch die Preliner-Folie werden außerdem die Zuläufe vor eindringendem Überschuss-Harz geschützt, so dass sich keine Harzpfropfen und Verstopfungen bilden können. Auch übernimmt ein Preliner beim Einzugsverfahren eine ähnliche, die Gleitreibung reduzierende Funktion wie die oben beschriebenen Gleitfolien für den einzuziehenden Schlauchliner. In diesem Fall kommt es auf niedrige Reibungskoeffizienten zwischen der Gleitfolie bzw. dem Preliner und der Außenfolie des Schlauchliners an. Hierdurch wird der Einlegeschlauch bzw. Schlauchliner beim Einziehen in das Rohr nicht durch die Rohrinnenwand bzw. Gegenstände im Rohr beschädigt, andererseits ist die Reibung zwischen Schlauchliner und Gleitfolie bzw. dem Preliner sehr niedrig und erleichtert ein Einziehen des Schlauchliners. Der Preliner kann also auch als Gleitschlauch bezeichnet werden.

Nachteilig bei der oben genannten, als Gleitfolie oder Preliner verwendeten HDPE-Folie ist unter anderem deren benötige Dicke von ca. 500 µm bis 800 µm oder mehr und damit einhergehend deren große Menge, um einigermaßen mechanische Stabilität und Festigkeit zu erhalten. Ansonsten würde die Gleitfolie bzw. der Preliner aufgrund der mechanischen Belastungen im Rohr, insbesondere hervorgerufen durch spitze oder raue Unebenheiten, Risse bekommen und könnte dann ihren Zweck nicht mehr erfüllen.

Auch weist die bekannte HDPE-Folie eine sehr große Dehnfähigkeit auf, die bis zu 200% betragen kann. Hierdurch kann leicht ein "Ziehharmonika-Effekt" entstehen, d.h. ein Zusammenziehen der Folie, wenn die Zugkraft entfernt wird. Wenn bei der Relativbewegung des Einlegeschlauchs zur Gleitfolie bzw. zum Preliner letztere gedehnt wird und schließlich die durch den Einlegeschlauch ausgeübte Zugkraft nachlässt, kann sich die Gleitfolie bzw. der Preliner wieder zusammenziehen, wobei die Gefahr einer Verstopfung durch die Gleitfolie bzw. den Preliner und den Einlegeschlauch im zu sanierenden Kanalrohr entsteht.

Andererseits erreicht HDPE schon bei dynamischer plötzlicher Dehnung die Maximalkraft. Wird noch weiter gezogen, beispielsweise ruckartig mit noch höherer Kraft, so beginnt die Folie irreversibel zu fließen, ehe sie zerreißt. Es besteht also die Gefahr des unkontrollierten Einziehens des Einlegeschlauchs, der somit im Kanal stecken bleiben und ggf. nicht wieder auf einfache Art entfernt werden bzw. ordnungsgemäß eingebracht werden kann.

Ferner sind die bisher im Stand der Technik verwendeten PE-Folien, insbesondere HDPE-Folien, bezüglich ihrer mechanischen Eigenschaften wie (Weiter-)Reißfestigkeit, Reißkraft, Schlagzähigkeit oder Durchstoßfestigkeit materialbedingt ungenügend.

Schließlich besitzen die im Stand der Technik als Preliner-Folie verwendeten PE-Folien auch keine Barrierewirkung gegen Harzbestandteile wie z.B. Styrol.

In der WO 2009/084518 A1, welche die Merkmale des Oberbegriffs des Anspruchs 1 offenbart, wird eine Schichtreihenfolge B / A / C beschrieben, worin A eine Schicht aus einem Gemisch aus einem Polyolefin und einem Polylactid (einem Polyester) ist, und worin die Schichten B und C als Außenschichten angesehen werden.

Es ist Aufgabe der vorliegenden Erfindung, eine Folie zur Verfügung zu stellen, welche hohen Anforderungen hinsichtlich ihrer Stabilität bei gleichzeitig relativ geringer Dicke genügt.

Diese Aufgabe wird durch die Folie gemäß Anspruch 1 gelöst.

Die Vorteile der Erfindung sind insbesondere darin zu sehen, dass erfindungsgemäße Folien gute mechanische Eigenschaften wie Robustheit, Widerstandsfähigkeit, Durchstoßfestigkeit, eine gute Eigensteifigkeit, geringe Dehnfähigkeit sowie gute Gleiteigenschaften aufweisen.

Erfindungsgemäß liegt das Polyester in der besagten mindestens einen innenliegenden Schicht der erfindungsgemäßen Folie in amorpher Form vor, wobei bevorzugt insbesondere amorphes Polyethylenterephthalat (A-PET) Verwendung findet.

Als Material kommt vorzugsweise handelsübliches A-PET zum Einsatz. Dieses kann auch regeneriert bzw. recycelt sein. Ebenso kann Eigenhäcksel aus Randbeschnitten etc. mit eingesetzt werden. Handelsübliches A-PET ist leicht erhältlich, beispielsweise unter dem Namen Wellman PermaClear® von der US-Firma DAK Americas, Novapet® von Novapet S.A., Spanien, oder Texpet R von der Firma Texplast GmbH, Wolfen oder SABIC® PET.

Es stellte sich überraschend heraus, dass es gelingt, zwei völlig verschiedene, von Natur aus unverträgliche Polymere, wie z.B. A-PET und PE, im Zuge der Extrusion zu homogenisieren und verträglich zu machen. Überraschend waren insbesondere die hervorragenden mechanischen Werte, die mit der erfindungsgemäßen Folie erzielt wurden. Aufgrund dieser Eigenschaften eignen sich die erfindungsgemäßen Folien damit bestens beispielsweise für deren Einsatz als Gleitfolie oder als Preliner bei der grabenlosen Kanalsanierung.

Wird die Folie beispielsweise als eine derartige Gleitfolie oder Preliner (Gleitschlauch) eingesetzt, ist diese(r) einerseits sehr widerstandsfähig, andererseits kann der Einlegeschlauch mit nur geringer Reibung durch das Rohr gezogen werden. Der Reibungskoeffizient (coefficient of friction, COF) gegen eine andere Folie mit einer PE-Außenschicht liegt hierbei beispielsweise zwischen 0,05 und 0,5, bevorzugt zwischen 0,1 bis 0,3. Auch hat sich gezeigt, dass die Ein- und Weiterreißfestigkeit von erfindungsgemäßen Folien sehr hoch ist, d.h. die Folien sind praktisch nicht einreißbar bzw. wenn sie eingerissen sind, so liegt der Kraftaufwand für das Weiterreißen sehr hoch. Zudem weisen sie eine nur sehr geringe bis vernachlässigbare Dehnung in Maschinenrichtung (md - machine direction), d.h. in Herstellungslaufrichtung der Folien, auf. Mit anderen Worten ist eine hohe Kraft in Maschinenrichtung vonnöten, um überhaupt eine gewisse Dehnung zu erzeugen. Somit kann der oben genannte "Ziehharmonika-Effekt" verhindert werden.

In der Anwendung als Gleitfolie oder Preliner ist es in einer vorteilhaften Ausführungsform zweckmäßig, dass diese keine scharfen Ecken und Kanten aufweist, um den Einlegeschlauch nicht zu beschädigen. Bevorzugt wird mit scharfen Messern geschnitten, ohne dass die erfindungsgemäße Folie hierbei ausfasert. Die Schnittfläche des Messers oder ein eingesetzter Schneidedraht sind vorzugsweise auf eine hohe Temperatur aufgeheizt, da hierdurch die spitzen Kanten und Ecken durch Aufschmelzen der Polymere an diesen Stellen wieder geglättet und abgestumpft werden können.

Weiterhin kann die erfindungsgemäße Folie mit Vorteil eingesetzt werden als Verpackungsmaterial für Lebensmittel oder für den sog. Non-Food-Bereich, insbesondere als tiefziehfähige Folie für Schalen, Becher, Platten, Wannen, Trays. Zu verpackende Lebensmittel können beispielsweise frische Lebensmittel oder Tiefkühlprodukte wie Frischfleisch, gekochtes, gepökeltes und verarbeitetes Fleisch, Geflügel, Obst und Gemüse, Fisch und Meeresfrüchte, Backwaren, Fertiggerichte, Snacks, Süßigkeiten und Konfekt. Im Non-Food-Bereich können Tiernahrung, medizinische Artikel sowie Konsum- und Industriegüter mit der erfindungsgemäßen Folie verpackt werden, beispielsweise Elektronikwaren, Haushaltswaren, Reinigungsprodukte, Bürobedarfsartikel, Handwerkszubehör sowie Industriekomponenten und Ersatzteile. Auch als Außenverkleidung, als außenliegende Abdeckungen von Gebäudeteilen, zum Einsatz bei Schutzanzügen, für Schilder sowie Anzeigetafeln jeder Art, für Displays oder als Isoliermaterial lässt sich die erfindungsgemäße Folie verwenden.

Die erfindungsgemäße Folie weist einen Mehrschichtaufbau auf. Die erfindungsgemäße Folie weist auf beiden Seiten eine eigene Deck- bzw. Außenschicht auf, wobei eine Außenschicht zum Beispiel eine reine A-PET-Außenschicht, allgemein eine Polyesterschicht, sein kann. Auch können beide Außenschichten als Polyesterschichten ausgebildet sein. Ebenso sind in einer oder beiden Außenschichten Mischungen von Polyester und Polyolefin möglich. Es ist selbstverständlich auch möglich, dass eine reine Polyesterschicht auf einer Außenseite und eine reine Polyolefinschicht auf der anderen Außenseite vorgesehen sind, während die besagte Mischschicht gemäß Anspruch 1, die mindestens ein thermoplastisches Olefin-Homo- oder Copolymer und mindestens ein amorphes Polyester enthält, zwischen diesen Außenschichten angeordnet ist. Eine oder mehrere Zwischenschichten sind in jedem Fall möglich.

Das mindestens eine Olefin-Homo-oder Copolymer in der mindestens einen innenliegenden Schicht stammt aus der Gruppe umfassend Polyethylen (PE, insbesondere LDPE oder HDPE), Polypropylen (PP), Polybutylen (PB), Polyisobutylen (PI) oder Mischungen aus wenigstens zwei der genannten Polymere. Mit "LDPE" wird Polyethylen niedriger Dichte bezeichnet, welches eine Dichte im Bereich von 0,86-0,93 g/cm³ aufweist und sich durch einen hohen Verzweigungsgrad der Moleküle auszeichnet. Mit "HDPE" wird Polyethylen hoher Dichte bezeichnet, welches nur eine geringe Verzweigung der Molekülkette aufweist, wobei die Dichte im Bereich zwischen 0,94-0,97 g/cm³ liegen kann.

Gemäß einer bevorzugten Ausführungsform ist in der besagten mindestens einen innenliegenden Schicht mehr als 50 Gew.-% an thermoplastischem Olefin-Homo- oder Copolymer und 0,1 bis 50 Gew.-% an Polyester enthalten.

Gemäß einer alternativen, besonders bevorzugten Ausführungsform der Erfindung weist die besagte mindestens eine innenliegende Schicht mehr als 50 Gew.-% an Polyester und 0,1 bis 50 Gew.-% an thermoplastischem Olefin-Homo- oder Copolymer auf.

Vorteilhafterweise enthält die besagte mindestens eine innenliegende Schicht zwischen 10 Gew.-% und 35 Gew.-% an thermoplastischem Olefin-Homo- oder Copolymer.

Gemäß einer vorteilhaften Ausführungsform ist das mindestens eine amorphe Polyester, insbesondere in Form von A-PET, zu mehr als 25 Gew.-%, bevorzugt zu mehr als 40 Gew.-% und besonders bevorzugt zu mehr als 50 Gew.-%, insbesondere zu mehr als 65% Gew.-%, in der besagten mindestens einen innenliegenden Schicht enthalten.

Die Zugabe von Polyolefinteilen in Form von thermoplastischem Olefin-Homo- und/oder Copolymer zu A-PET bzw. derer Vorhandensein führt zu einer erheblichen Verbesserung der Zähigkeit und der Ein- und Weiterreißfestigkeit.

Es hat sich des Weiteren als vorteilhaft erwiesen, wenn das Olefin-Homo-oder Copolymer in der besagten mindestens einen innenliegenden Schicht eine Glasübergangstemperatur Tg im Bereich von -90°C bis +110°C, insbesondere von -80°C bis +40°C aufweist. Hierdurch wird eine zu große Steifigkeit des Polyesters, insbesondere des A-PET, reduziert, wodurch der E-Modul der Folie abnimmt.

Das Olefin-Homo- oder Copolymer in der besagten mindestens einen innenliegenden Schicht ist bevorzugt Polyethylen (PE). Dieses wird vorzugsweise in Form von High Density Polyethylen (HDPE) verwendet. Auch LDPE und/oder LLDPE (Linear Low Density Polyethylene) sind mit Vorteil einsetzbar. Ferner eignen sich Polyolefine, insbesondere Polyethylene, die auf Basis von Metallocen-Katalysatoren polymerisiert wurden (mPE), wie mLDPE (metallocen LDPE) und mLLDPE (metallocen LLDPE). Polyethylen ist in unterschiedliche Kategorien klassiert, hauptsächlich in Bezug auf ihre Dichte und Verzweigung. Seine mechanischen Eigenschaften hängen in bedeutendem Maße von Variablen wie der Länge und der Art der Verzweigung, der Kristallstruktur und dem Molekulargewicht ab. Die meist verkauften Polyethylene sind HDPE, LLDPE und LDPE. Im Speziellen sieht die Reihenfolge wie folgt aus (englische Schreibweise der Polymere):
∘ Ultra-high Molecular Weight Polyethylene (UHMWPE)
∘ Ultra Low Molecular Weight Polyethylene (ULMWPE oder PE-WAX)
∘ High Molecular Weight Polyethylene (HMWPE)
∘ High Density Polyethylene (HDPE)
∘ High Density Cross-linked Polyethylene (HDXLPE)
∘ Cross-linked Polyethylene (PEX or XLPE)
∘ Medium-density Polyethylene (MDPE)
∘ Linear Low Density Polyethylene (LLDPE)
∘ Low Density Polyethylene (LDPE)
∘ Very Low Density Polyethylene (VLDPE)
∘ Chlorinated Polyethylene (CPE)

VLDPE (Very Low Density Polyethylene) ist durch einen Dichtebereich von 0.880 - 0.915 g/cm³ definiert. Es ist im Wesentlichen ein lineares Polymer mit einem hohen Anteil an kurzen Seitenketten, üblicherweise hergestellt durch lineare Copolymerisation von Ethylen mit kurzkettigen Alpha-Olefinen (z.B. 1-Buten, 1-Hexen, and 1-Okten). VLDPE wird sehr häufig unter Verwendung von Metallocen-Katalysatoren hergestellt, weil durch diese Katalysatoren mehr Co-Monomere eingebaut werden können.

Gemäß einer anderen vorteilhaften Alternative findet als Olefin-Homo- oder Copolymer Polypropylen (PP) in der mindestens einen innenliegenden Schicht Verwendung.

Mischungen von verschiedenen, einschließlich der oben aufgezählten, Olefin-Homo- oder Copolymeren in der besagten mindestens einen innenliegenden Schicht gemäß Anspruch 1 sind ohne Weiteres möglich.

Als in der erfinderischen Mischung der besagten mindestens einen innenliegenden Schicht gemäß Anspruch 1 einsetzbares HDPE-Material sei beispielsweise Hostalen® von LyondellBasell Industries genannt.

Das mindestens eine Olefin-Homo- oder Copolymer in der mindestens einen besagten innenliegenden Schicht gemäß Anspruch 1 kann als Haftvermittler ausgebildet sein oder mit haftvermittelnden Funktionsgruppen versehen bzw. modifiziert sein. Ein solcher Haftvermittler bzw. ein Olefin-Homo- oder Copolymer mit einer Haftvermittlerfunktion enthält entsprechende funktionelle Gruppen, beispielsweise Epoxy-Gruppen, Peroxid-Gruppen, Ketongruppen, Aldehyd-Gruppen, (Carbon-)Säuregruppen, Amin- oder Amidgruppen, Säureanhydrid-Gruppen und/oder Hydroxylgruppen. Derartige Funktionalisierung kann die Verträglichkeit der an sich als unverträglich angesehenen Polymere Polyester und Polyolefin verbessern.

Vorteilhaft ist insbesondere die Modifizierung mit wenigstens einer organischen Säure oder wenigstens einem organischen Säureanhydrid, vorzugsweise mit einem zyklischen organischen Säureanhydrid. Besonders bevorzugt ist die Modifizierung mit Maleinsäureanhydrid-Gruppen, wobei diese Gruppen haftvermittelnd zwischen dem mindestens einen Polyester und dem mindestens einen Olefin-Homo- oder Copolymer wirken.

Es ist ebenfalls möglich, dass zusätzlich zu modifiziertem Polyolefin auch unmodifiziertes Polyolefin in der besagten mindestens einen innenliegenden Schicht gemäß Anspruch 1 enthalten ist.

Es ist zu betonen, dass überraschenderweise eine Extrusion von Polyester und Polyolefin zur Herstellung der erfindungsgemäßen Folie auch ohne entsprechende Veträglichkeitsmachung möglich war. Es gelang, die chemisch verschiedenen Materialien mittels eines herkömmlichen Extruders gut zu homogenisieren. Mit anderen Worten kann auch ohne Funktionalisierung die besagte Mischung extrudiert werden.

Gemäß der oben ausgeführten Variante sind jedoch auch die vorgenannten funktionalisierten Polymere, wie Verträglichkeitsmacher (sog. Compatibilizer) oder übliche Haftvermittler, einsetzbar. In einer bevorzugten Ausführungsform werden diese in geringen Mengen von 0,1 bis 10 Gew.-% zu dem Olefin-Homo- oder Copolymer in der mindestens einen besagten innenliegenden Schicht zugesetzt.

Obwohl nicht unbedingt erforderlich, können die verschiedenen Komponenten A-PET und Polyolefin im Vorfeld durch Compoundierung vermischt werden, um die Homogenität der Mischung noch weiter zu verbessern.

Die erfindungsgemäße Folie weist vorzugsweise eine Dicke von 20 bis 2000 µm auf, bevorzugt von 50 bis 1500 µm, und besonders bevorzugt von 100 bis 1000 µm, insbesondere von 200 bis 900 µm. Für den Einsatz als Gleitfolie bzw. Preliner hat sich der letztgenannte Schichtdickenbereich als besonders zweckmäßig erwiesen.

Es ist jedoch zu betonen, dass mit dem Begriff "Folie" keine maximale Dicke impliziert sein soll.

Gemäß einer vorteilhaften Ausführungsform weist die erfindungsgemäße Folie mindestens eine eigenständige Barriereschicht auf. Eine solche Barriereschicht basiert vorzugsweise auf Ethylenvinylalkohol (EVOH) oder Polyamid (PA) oder beiden. Vorteilhaft wirkt die Barriereschicht als Hindernis gegenüber Monomere wie Styrol und/oder gegen Öle und Fette. Die chemische Verbindung, welche die Barrierefunktion ausübt (bspw. PA), kann bis zu 100% in der Barriereschicht vorhanden sein.

Alternativ oder zusätzlich kann die erfindungsgemäße Folie vorteilhafterweise eine eigenständige Schicht aufweisen, die mindestens eine als Barriere gegen den Durchtritt von chemischen Substanzen, vorzugsweise gegen Monomere (bspw. Styrol), wirkende chemische Verbindung und/oder mindestens eine als Barriere gegen UV- und vorteilhafterweise sichtbares Licht wirkende chemische Verbindung enthält. Als chemische Verbindung für die Barrierewirkung ist der Einsatz von Polyamid vorteilhaft. Zur Erzielung einer UV-Licht-Barriere können verschiedenste Verbindungen - alleine oder in Kombination - eingesetzt werden, um UV-Strahlung und vorteilhafterweise auch sichtbare Strahlung (zumindest einen Teil des sichtbaren Spektrums, vorteilhafterweise kurzwelliges sichtbares Licht) zu absorbieren und/oder zu reflektieren. Vorzugsweise wird hierbei UV-Strahlung im Wellenlängenbereich von 200 bis 400 nm und Strahlung des sichtbaren Lichts im Wellenlängenbereich 400 bis 800 nm absorbiert und/oder reflektiert, vorzugsweise zu mehr als 90%. Insbesondere wird von der erfindungsgemäßen Folie eine Transmission im Wellenlängenbereich von 300 bis 500 nm, bevorzugt von 350 bis 450 nm weitgehend bis vollständig unterbunden. Es können hierzu organische und/oder anorganische Farbpigmente, Farbstoffe bzw. Verbindungen zum Einsatz kommen, die dem Fachmann bekannt sind (s. bspw. DE 10 2009 041 841 A1).

Bei einer vorteilhaften Ausführungsform enthält die erfindungsgemäße Folie mindestens eine eigenständige Schicht sowohl mit mindestens einer als mechanischer Barriere wirkenden chemischen Verbindung als auch mindestens einer chemischen Verbindung zur Erzielung einer UV-Barriere und Barriere gegen Bereiche des sichtbaren Lichts.

Je nach Anwendungsfall können ein oder mehrere der folgenden Polymere und Stoffe zum Polyester, vorzugsweise in Form von A-PET vorliegen, bzw. zu der das Polyester enthaltenen mindestens einen innenliegenden Schicht zugegeben sein, wobei diese Additive bis zu maximal 15 Gew.-% zugesetzt sind: Polystyrol (PS); Polyhalogenide, wie z.B. PVC und/oder Polyvinylidenchlorid (PVdC); Polyamid (PA); Polyvinylalkohol (PVOH oder PVAL); Ethylenvinylalkohol Copolymer (EVOH); Haftvermittler; Ethylenvinylacetat (EVAc); ein oder mehrere lonomere; ein oder mehrere Poly(Meth)acrylate; Ethylen-haltige Poly(meth)acrylate; Polyvinylacetat (PVAc); Polycarbonat (PC); Polyacrylnitril (PAN); weitere Polyester wie Polybutylenterephthalat (PBT), Polyethylennaphthalat (PEN), Polymilchsäure (PLA) und/oder Polyhydroxyalkanoate (PHA); ein oder mehrere Ethylenacrylsäure-Copolymere (EAA); Polyvinylbutyral (PVB); Polyvinylacetal; Celluloseacetat (CA); Celloloseacetobutyrat (CAB); Polysaccharide; Stärke; zyklisches Olefin-Copolymer (COC).

Zur Verbesserung der Folieneigenschaften können folgende Bestandteile bzw. Additive im Zuge der Extrusion in einer oder in mehreren Schichten eingesetzt werden, wobei diese Bestandteile bzw. Additive bis zu maximal 15 Gew.-% zugesetzt sind. Als Additive werden zum Beispiel optische Aufheller, thermische Stabilisatoren, Antioxidantien, Oxygen scavenger, Gleitmittel, Abstandshalter (z.B. Silica-Partikel, SAS), Slip-/Antiblockmittel, Farben, Pigmente, Schäumungsmittel, Antistatika, Prozesshilfsmittel, Lubricating Agents, Flammschutzmittel, Flammhemmer, Impact Modifier, Schlagzähverbesserer, Anti-Hydrolysemittel, UV-Absorber, UV-Schutzmittel, Stabilisatoren, Antifog-Additive, Wachse, Wachsadditive, Trennmittel, Siegel- oder Peel-Additive, Nukleierungsmittel, Combatibilizer (Verträglichkeitsmacher), Fließmittel, Fließverbesserer, Melt Strength Enhancer, Molekulargewichtserhöher, Vernetzer oder Weichmacher verwendet.

Die erfindungsgemäßen Folien lassen sich auf unterschiedliche Weise herstellen. Eine bevorzugte Herstellung wird mittels Extrusion bzw. Coextrusion realisiert, beispielsweise durch Blasextrusion oder Cast-Extrusion. Ein mögliches Coextrusionsverfahren ist hierbei das Chill-Roll-Verfahren (Breitschlitzdüsentechnik). Des Weiteren können sowohl einzelne als auch sämtliche Schichten der erfindungsgemäßen Folie durch Extrusion, insbesondere durch Blasfolien-Extrusion und/oder Flachfolien-Extrusion, insbesondere Blasfolien-Co-Extrusion und/oder Flachfolien-Co-Extrusion gebildet werden. Das Flachfolien-Co-Extrusionsverfahren hat sich hierbei als ganz besonders geeignet erwiesen.

Auch ist eine Extrusionsbeschichtung möglich, ebenso wie ein Glättwerkprozess. Des Weiteren sind Laminierungstechniken einsetzbar.

Die erfindungsgemäße Folie kann mit weiteren Folien kaschiert sein, um eine Folienkombination zu erhalten, wobei beispielsweise eine Thermokaschierung, eine Extrusionskaschierung oder eine Kleberkaschierung zum Einsatz kommt. Gemäß einer entsprechenden, vorteilhaften Ausführungsform empfiehlt sich die Kaschierung mit einer Folie, welche dem Material der Außenfolie eines wie oben beschriebenen Einlegeschlauchs entspricht. Eine vorteilhafte Basis der Kaschierfolie ist hierbei ein Polyolefin, wobei eine PE-Basis für die Kaschierfolie bevorzugt ist.

Im Falle der Ausbildung der erfindungsgemäßen Folie als Gleitfolie bzw. Preliner ist eine PE-Basis für die Kaschierfolie bei einer Ausführungsform bevorzugt, da im Zuge der exothermen Aushärtung der als Trägermaterial dienenden Reaktivharze im Einlegeschlauch durch die Temperaturerhöhung aufgrund der Initiierung mit UV-Licht (oder beispielsweise heißem Wasser oder Wasserdampf als alternativen Quellen zur Harzhärtung) auch eine Anknüpfung der - mindestens ein thermoplastisches Olefin-Homo- oder Copolymer enthaltenden - Gleitfolie bzw. des Preliners an den (ausgehärteten) Einlegeschlauch realisiert werden kann. Hierdurch kann die Stabilität des Einlegeschlauchs, insbesondere nach dessen Aushärtung, nochmals erheblich verstärkt werden, was zur Verbesserung der Festigkeit des mit Schlauchliner sanierten Kanals beiträgt.

Alternativ oder zusätzlich weist eine Folienkombination, die eine erfindungsgemäße Folie sowie mindestens eine zusätzliche, vorzugsweise aufkaschierte, Folie umfasst, eine Lichtschutzfolie als solche zusätzliche Folie auf. Diese Lichtschutzfolie ist vorzugsweise eine UV-Licht und vorteilhafterweise auch sichtbare Strahlung (zumindest einen Teil des sichtbaren Spektrums, vorteilhafterweise kurzwelliges sichtbares Licht) absorbierende und/oder reflektierende Folie. Vorzugsweise wird hierbei die UV-Strahlung im Wellenlängenbereich von 200 bis 400 nm und die Strahlen des sichtbaren Lichts im Wellenlängenbereich 400 bis 800 nm zumindest teilweise absorbiert und/oder reflektiert, vorzugsweise zu mehr als 90% und besonders bevorzugt von mehr als 99%. Insbesondere wird von der erfindungsgemäßen Folie eine Transmission im Wellenlängenbereich von 300 bis 500 nm, bevorzugt von 350 bis 450 nm weitgehend bis nahezu vollständig unterbunden. Es können hierzu organische und/oder anorganische Farbpigmente, Farbstoffe bzw. Verbindungen zum Einsatz kommen, die dem Fachmann bekannt sind (s.o.: DE 10 2009 041 841 A1). Die UV- und ggf. Lichtschutzfolie kann daher vollkommen blickdicht sein, oder sie ist transparent oder zumindest kontakttransparent.

Eine solche UV- und ggf. Licht-Schutzfolie ist bei einer als Gleitfolie bzw. als Preliner eingesetzten erfindungsgemäßen Folie bevorzugt an der dem harzgetränkten Trägermaterial zugewandten Folienaußenseite aufkaschiert und grenzt vorteilhafterweise an die Außenfolie des Einlegeschlauchs an.

In einer solchen aufkaschierten UV- und ggf. Licht-Schutzfolie können - gemäß einer ganz bevorzugten Ausführungsform - zudem chemische Verbindungen enthalten sein, die eine Barrierefunktion gegenüber insbesondere Monomeren, Harzen, Ölen, Fetten, Gasen, etc. ausüben. Es wird hierzu auf die obigen Ausführungen zu der Integration einer Barriere-Schicht in der erfindungsgemäßen Folie selbst verwiesen. Die entsprechenden als Barriere wirkenden chemischen Verbindungen können entsprechend in der aufkaschierten Folie enthalten sein. Eine Folie mit einer solchen Barriereschicht kann auch alternativ oder zusätzlich zu der UV- und ggf. Licht-Schutzfolie auf eine erfindungsgemäße Folie gemäß Anspruch 1 aufkaschiert sein.

Alternativ zum Einsatz der erfindungsgemäßen Folie als Gleitfolie (ungefähr im Querschnitt halbkreisförmig) bzw. als Preliner (Gleitschlauch) bei der grabenlosen Kanalsanierung zur Verwendung mit einem herkömmlichen Schlauchliner ist die oben genannte erfindungsgemäße Folienkombination aus besagter Folie als Preliner (Gleitschlauch) und vorteilhafterweise aufkaschierter UV- und ggf. Licht-Schutzfolie - ggf. mit mindestens einer als Barriere wirkenden chemischen Verbindung (z.B. EVOH, PA, s.o.) - als äußerem Schlauch (auch Außenschlauch genannt) für ein Schlauchliner-System einsetzbar. In diesem Fall wird also der üblicherweise verwendete Schlauchliner, bestehend mindestens aus innerer Folie (Innenfolie), harzgetränktem Trägersystem und äußerer Folie (Außenfolie), modifiziert, indem die äußere Folie (UV- und ggf. Licht-Schutzfolie) mit dem Preliner (Gleitschlauch) kaschierend verbunden wird. Der "abgespeckte" Schlauchliner umfasst dann nicht mehr den äußeren Schlauch bzw. die äußere Folie (Außenfolie), sondern lediglich noch das harzgetränkte Trägersystem und die innere Schlauchfolie (sowie ggf. weitere Folien bzw. Schichten).

Die integrierte Gleitschutzfolie oder Kombinationsfolie von Gleitfolie und UV-Lichtschutzfolie inklusive Barriere kann in einer besonders bevorzugten Ausführungsform auch nur teilweise das Außensystem eines Schlauchliners darstellen. So wird zum Beispiel eine Gleitfolie mit einer UV- und Lichtschutzfolie, die eine Barriere gegen Monomere wie Styrol aufweist, kaschiert, wobei diese Kombinationsfolie nur den unteren Teil der Außenfolie des Schlauchliners bildet (z.B. eine untere Halbschale). Der Oberteil des Außensystems, der eine flexible UV- und Lichtschutzfolie mit Styrolbarriere darstellt (ohne mit der Gleitfolie kaschiert zu sein) wird dann - etwa durch Siegelung - mit der unteren Gleitschutzfolie oder der unteren Außenfolie zu einem Schlauch verbunden. Hierbei werden die Längskanten des nicht kaschierten Teils der Außenfolie, also etwa des Oberteils des Außensystems, mit den Längskanten der offenen Gleitfolie oder dem auf die Gleitfolie aufkaschierten Teil der Außenfolie, also dem Unterteil des Außensystems verbunden, vorzugsweise versiegelt. Ober- und Unterteil der Außenfolie weisen vorzugsweise den gleichen Schichtaufbau und die gleiche Schichtzusammensetzungen auf, wenngleich sich deren Schicht- und Gesamtstärken auch unterscheiden können.

Es liegt also - bildlich gesprochen - eine starrere und mechanisch sehr stabile und robuste untere Halbschale vor, die mit einer flexiblen, dehnbaren oberen Halbschale durch Siegelung verbunden wird. Das so erhaltene schlauchförmige Außenfoliensystem des Liners schützt damit das innenliegende Harz vor UV- und Lichtstrahlung und auch vor dem Austrocknen, da eine umfassende Barriere gegen Monomere wie Styrol erreicht wird. Ein derartiges Liner-Außenfoliensystem ist sehr vorteilhaft, da der deutlich stabilere untere Bereich den Liner beim Einzug in den zu sanierenden Kanal vor Verletzungen schützt, und der Schlauchliner durch den flexibleren oberen Teil weitaus dehnfähiger ausgebildet ist, was das Aufstellen des Liners in den Kanal unterstützt.

Gemäß einer Alternative ist eine im Querschnitt im Wesentlichen halbkreisförmige Gleitfolie mit einer schlauchförmigen UV- und Lichtschutzfolie kaschiert, welche wiederum eine Barriere gegen Monomere wie Styrol aufweist. Der untere Teil dieser Kombinationsfolie bildet somit z.B. eine untere Halbschale, während der obere Teil von der anderen, nicht-kaschierten Hälfte der schlauchförmigen UV- und Lichtschutzfolie gebildet ist. Hier ist also die UV-und Lichtschutzfolie schlauchartig ausgebildet und nicht - im Querschnitt gesehen - zweigeteilt ausgebildet, so dass auf eine wie zuvor beschriebene Siegelung verzichtet werden kann.

Gemäß einer anderen Weiterbildung der Erfindung ist der gesamte Schlauchliner (innerer Schlauch, harzgetränktes Trägermaterial, äußerer Schlauch) mit einem Preliner (Gleitschlauch), welcher die erfindungsgemäße Schicht umfasst, verbunden, so dass dieser Verbund insgesamt in ein zu sanierendes Rohr eingebracht wird.

Der Preliner (Gleitschlauch) kann ferner in Form einer Flachfolie mit einer UV- und Licht-Schutzfolie, die bevorzugt auch eine Barriere gegen Monomere und Öle wie Styrol oder Gase aufweist und gleichfalls in Form einer Flachfolie vorliegt, kaschiert werden, um anschließend zu einem Schlauch gesiegelt oder geschweißt zu werden.

Die erfindungsgemäße Folie kann auch nachträglich noch gereckt oder geprägt werden. Auch ist eine Bedruckung möglich.

Die Strukturierung der Folienoberfläche kann zudem durch Aufgießen auf eine entsprechend strukturierte Walze erfolgen.

Bevorzugt wird die Folienoberfläche durch Zugabe von Abstandshaltern (Antiblockmittel) aufgeraut, beispielsweise durch Ansetzen eines Batches mit gröberen Partikeln mit einem Durchmesser von 0,01 bis 10 µm. Beispielsweise werden hierzu Silica-Partikel in mindestens einer der Außenschichten verwendet. Hierdurch wird eine Adhäsion zwischen der Gleitfolie bzw. dem Preliner und dem Einlegeschlauch verhindert.

Die Folie kann ferner auf der oder den Oberflächen noch mit einem Pulver oder Puder versehen werden. Bevorzugt wird dazu beispielsweise Talkum eingesetzt.

In dem vorgenannten Zusammenhang ist ebenfalls zu beachten, dass bevorzugt der Reibwert der erfindungsgemäßen Gleitfolie bzw. des Preliners gegenüber der Außenfolie des Einlegeschlauchs, der in den Kanal zur Sanierung mit Hilfe der Gleitfolie bzw. des Preliners eingeführt wird, klein ist. Gemäß einer diesbezüglich vorteilhaften Ausführungsform lässt sich eine Verringerung des Reibungskoeffizienten (COF) mit Wachsadditiven, beispielsweise Ethylen-bis-stearamid (EBS), Erucasäureamid (ESA), etc.) sowie mit Trennmitteln erreichen. Diese Wachsadditive bzw. Trennmittel werden bevorzugt auf die der Außenfolie des Schlauchliners zugewandten Oberfläche der Gleitfolie appliziert.

Die erfindungsgemäße Folie kann auch geschäumt werden oder mindestens eine geschäumte Schicht enthalten. Auch die mindestens eine innenliegende Schicht mit beispielsweise einer Mischung aus PE und A-PET kann geschäumt sein, was ebenfalls eine bevorzugte Ausführungsform darstellt.

Des Weiteren ist es vorteilhafterweise möglich, die erfindungsgemäße Folie mit einem Non-Woven-Material, Textil, Nadelfilz, Synthesefasern oder Vlies zu kaschieren. Insbesondere erfolgt die Kaschierung mit einem für Flüssigkeiten und Harzen saugfähigen Material. Eine derartige Kaschierung der erfindungsgemäßen Folie, welche zusätzlich eine UV- und Lichtschutzfolie mit oder ohne Barriere aufweist, mit einem Non-Woven-Material ist ebenfalls möglich. Besonders bevorzugt wird aber die erfindungsgemäße Folie gegen eine UV- und Lichtschutzfolie kaschiert, die ihrerseits bereits mit einem Non-Woven-Material kaschiert worden ist. Die Kaschierung mit der erfindungsgemäßen Folie gegen die UV- und Lichtschutzfolie erfolgt bevorzugt auf der nicht mit Non-Woven kaschierten Seite der UV- und Lichtschutzfolie. So kann die mit einem Non-Woven kaschierte Seite (hier der UV- und Lichtschutzfolie inkl. Barriere) immer noch zur Verbindung mit dem reaktiven Harz zur Verfügung stehen.

Weitere Verarbeitungsmöglichkeiten bestehen in einem Zusammenbringen der erfindungsgemäßen Folie mit einem "Gelege" oder Gewirke, z.B. einem Kunststoffnetz. Alternativ kann dieses "Gelege" bzw. Gewirke in die Folie zum Zwecke der weiteren Verstärkung mit eingebracht werden.

In den Figuren sind schematisch verschiedenen Ausführungsbeispiele der Erfindung dargestellt. Es zeigen:
- **Fig. 1**: ein zu sanierendes Kanalrohr mit einem Preliner (Gleitschlauch), im Querschnitt;
- **Fig. 2**: ein zu sanierendes Kanalrohr mit einer Gleitfolie, im Querschnitt;
- **Fig. 3**: einen Querschnitt durch den Preliner bzw. die Gleitfolie gemäß der Fig. 1 bzw. der Fig. 2;
- **Fig. 4**: ein zu sanierendes Kanalrohr mit einem Preliner (Gleitschlauch) mit einer aufkaschierten UV-Schutzfolie, im Querschnitt;
- **Fig. 5**: einen Querschnitt durch den Preliner und die aufkaschierte UV-Schutzfolie, im Querschnitt;
- **Fig. 6**: ein zu sanierendes Kanalrohr mit einem Preliner und einem Schlauchliner, im Querschnitt;
- **Fig. 7**: ein zu sanierendes Kanalrohr mit einer Gleitfolie und einem auf die Gleitfolie aufkaschierten ersten, unteren Außenschlauch sowie einem an diesen Verbund gesiegelten zweiten, oberen Außenschlauch, im Querschnitt, und
- **Fig. 8, 8a, 8b**: einen schematischen Querschnitt durch eine Schale, insbesondere für Lebensmittel, sowie zwei vergrößerte Detailansichten zweier verschiedener Folienaufbauten.

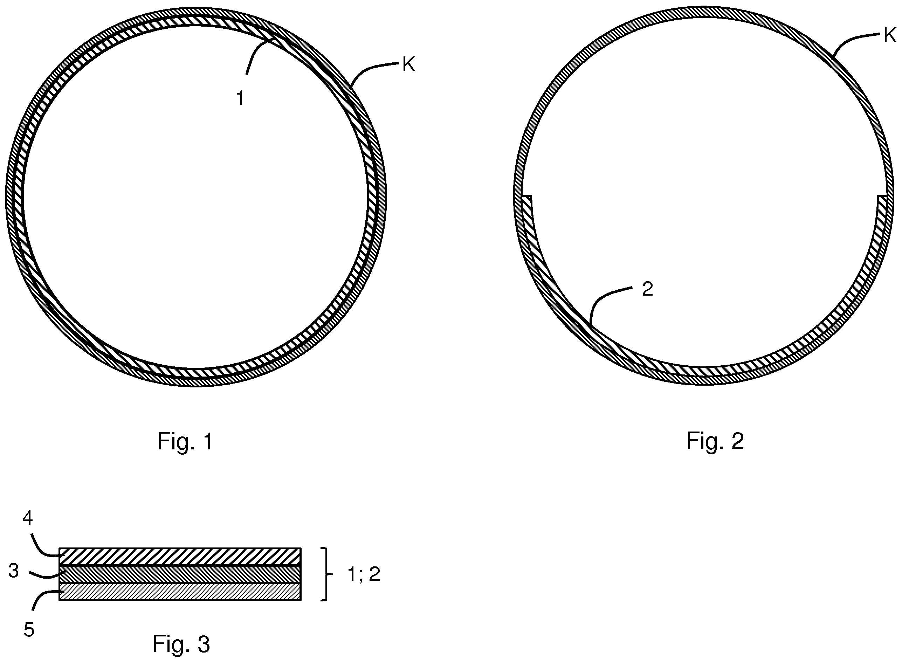

In der Fig. 1 ist im Querschnitt ein zu sanierendes Kanalrohr K dargestellt, in den ein Preliner 1 (Gleitschlauch) entsprechend der Erfindung eingezogen ist. Eine im Querschnitt im Wesentlichen halbkreisförmige Gleitfolie 2 ist in der Fig. 2 dargestellt; sie ist entsprechend auf der unteren Halbkreisschale des Kanalrohrs K aufgebracht. Der Preliner 1 gemäß der Fig. 1 und die Gleitfolie 2 gemäß der Fig. 2 weisen eine Schicht 3 mit einer Mischung aus mindestens einem thermoplastischen Olefin-Homo- oder Copolymer, gegebenenfalls modifiziert, und mindestens einem Polyester auf (s. Anspruch 1). Sie sind mechanisch widerstandsfähig und weisen zudem eine niedrige Reibung auf, um einen Schlauchliner einziehen zu können.

In der Fig. 3 ist im Querschnitt ein möglicher 3-schichtiger Aufbau des Preliners 1 gemäß der Fig. 1 bzw. der Gleitfolie 2 gemäß der Fig. 2 dargestellt. Hier ist die besagte Schicht 3 mit der besagten Mischung zwischen zwei äußeren Schichten 4, 5 angeordnet, die beide 100% Polyester, z.B. A-PET, enthalten (s. auch korrespondierendes Beispiel 1 weiter unten). Bei einer nicht dargestellten Variante kann zusätzlich zur Schicht 3 (und ggf. weiteren Schichten) mindestens eine eigenständige Barriereschicht gegen den Durchtritt von Gasen und/oder chemischen Substanzen, vorzugsweise auf der Basis von Ethylenvinylalkohol (EVOH) oder Polyamid (PA) oder beiden und weiter bevorzugt jeweils zu 100% aus diesen Verbindungen, vorgesehen sein. In dieser oder einer anderen Schicht kann zudem mindestens eine als Barriere gegen UV-Licht und sichtbares Licht wirkende chemische Verbindung enthalten sein, so dass eine Transmission von Strahlung im Wellenlängenbereich von 350 bis 450 nm zumindest weitgehend unterbunden wird.

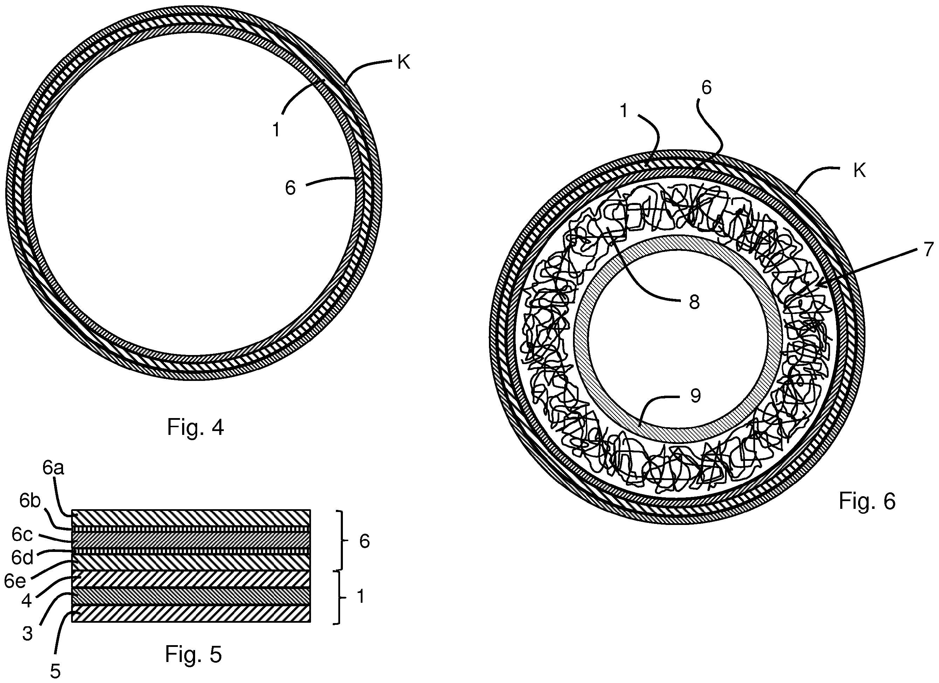

In der Fig. 4 ist dargestellt, dass auf dem Preliner 1 gemäß der Fig. 1 eine Folie 6 aufkaschiert ist oder eine solche Folie durch Coextrusion gebildet wurde. Die zusätzliche Folie 6 ist im vorliegenden Fall als UV-Schutzfolie mit Barrierefunktion gegen beispielsweise Styrol ausgebildet. Wie der detailliertere Querschnitt gemäß der Fig. 5 zeigt, ist die auf den Preliner 1 aufkaschierte Folie 6 fünfschichtig aufgebaut, beispielsweise mit der Schichtfolge Polyethylen (6a) / HV (6b) / Polyamid (6c) / HV (6d) / Polyethylen (6e). Diese Folie 6 entspricht vorliegend einer Außenschlauchfolie, die - anders als im Stand der Technik - nicht mit einem Schlauchliner, sondern mit dem Preliner 1 verbunden ist. Gemäß Stand der Technik umfasst ein solcher Schlauchliner in seiner einfachsten Form üblicherweise einen Innenschlauch bzw. eine schlauchförmige Innenfolie, ein Trägersystem mit UV-aushärtbarem Harz sowie einen Außenschlauch bzw. eine schlauchförmige Außenfolie. Vorliegend bildet jedoch der Außenschlauch 6 einen Folienverbund mit dem Preliner 1. Der dann zu verwendende Schlauchliner weist dann zweckmäßigerweise keinen Außenschlauch mehr auf. Gemäß einer nicht dargestellten Alternative ist zwischen dem Preliner 1 und der zusätzlichen äußeren Folie (Außenfolie) 6 eine weitere Folie kaschiert (oder auch mehrere Folien), beispielsweise eine eigene oder eine weitere UV-Schutzfolie. Ein derartiger Verbund kann auch durch Coextrusion hergestellt werden.

In der Fig. 6 ist ein vollständiges System eines zu sanierenden Kanalrohrs K gezeigt, in den ein Preliner 1 eingezogen ist. Die Außenfolie 6 kann entweder mit dem Preliner 1 verbunden sein (s. Fig. 4) oder Teil des - dann wie bekannt aufgebauten - Schlauchliners 7 sein, der dann eine Innenfolie (innere Folie) 9, ein Harz-Trägersystem 8 und die besagte Außenfolie (äußere Folie) 6 aufweist. Gemäß einer weiteren Alternative können auch der Preliner 1 und der gesamte Schlauchliner 7 einen einzigen Verbund bilden, der in das Kanalrohr K eingebracht ist.

Der schlauchförmige Preliner 1 mit einer aufkaschierten Zusatzfolie (oben: die Außenfolie 6) kann mittels Extrusionskaschierung oder auch durch Siegelung des kaschierten Folienverbundes erhalten werden. Besonders bevorzugt wird eine derartige Verbundstruktur durch Coextrusion hergestellt.

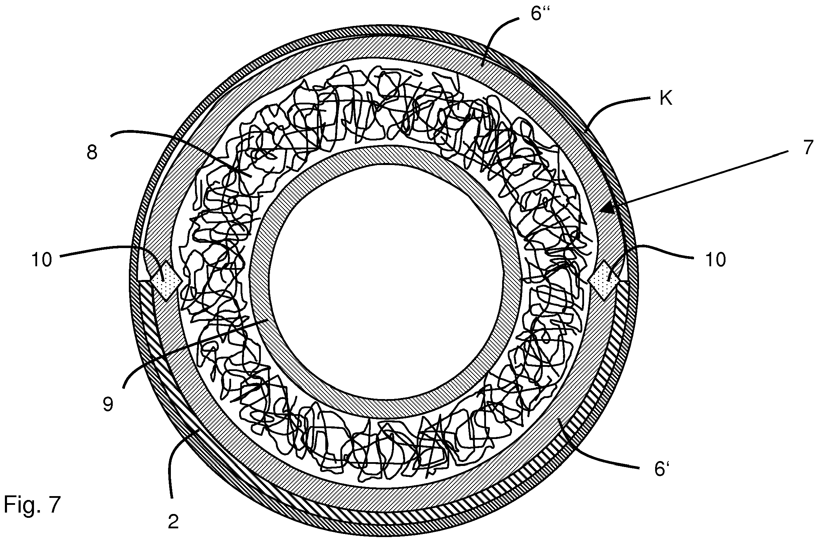

In der Fig. 7 ist eine Variante dargestellt, bei der eine - im Kanal eingebauten Zustand im Querschnitt im Wesentlichen halbschalenförmige - Gleitfolie 2 mit einer als UV-und Lichtschutzfolie inklusive Styrolbarriere ausgebildeten Außenfolie 6' kaschiert ist, die eingebaut im Kanal dann ebenfalls einen im Querschnitt halbkreisförmigen Zustand einnimmt. Diese Außenfolie 6' stellt den unteren Teil des Außensystems eines Schlauchliners 7 dar. Der Oberteil des Außensystems wird von einer weiteren Außenfolie 6" gebildet, die ebenfalls als flexible UV- und Lichtschutzfolie mit Styrolbarriere ausgebildet ist (ohne mit der Gleitfolie 2 kaschiert zu sein). Die beiden Außenfolien 6', 6", die vorzugsweise beide den gleichen Schichtaufbau und die gleiche Schichtzusammensetzung aufweisen, sind vorliegend an den in Schlauchlängsrichtung (normal zur Zeichenebene) laufenden Siegelstellen 10 miteinander zu einem Schlauch versiegelt. Alternativ kann die obere Außenfolie 6" mit der Gleitfolie 2 versiegelt sein. Der von den beiden halbkreisförmigen Außenfolien 6', 6" separate, übrige Teil des Schlauchliners 7 besteht vorliegend wiederum aus einem Harz-Trägersystem 8 und einer Innenfolie 9.

Die Kaschierung der unteren Außenfolie 6' mit der Gleitfolie 2 sowie die Versiegelung der unteren mit der oberen Außenfolie 6', 6" (bzw. der Gleitfolie 2 mit der oberen Außenfolie 6") erfolgt vor dem Einbau in das Kanalrohr.

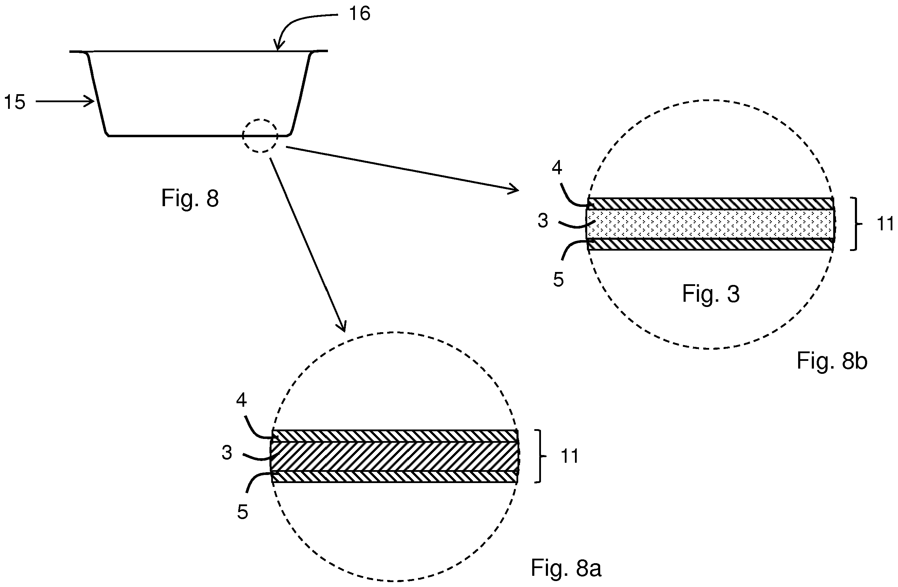

Die Fig. 8 zeigt in einem schematischen Querschnitt eine in der Form weithin bekannte, vorzugsweise tiefgezogene Schale 15, die zur Verpackung von Lebensmitteln (Käse, Wurst, etc.) einsetzbar ist und einen erfindungsgemäßen Folienaufbau hinsichtlich ihres Bodens und der Seitenwände aufweist. Die Schale 15 bzw. Mulde kann mittels einer Oberfolie 16 verschlossen sein, wobei die bekannten Systeme Festverschluss, easy peel oder Wiederverschluss eingesetzt werden können. Diese Verschlusssysteme sind in der Unterfolie und/oder der Oberfolie installierbar. Wie den vergrößerten Detailausschnitten gemäß Fig. 8a und 8b zu entnehmen ist, besitzt die Folie 11 (Unterfolie), aus der die Schale 15 besteht, eine innere Schicht 3, welche entsprechend Anspruch 1 ausgebildet ist, d.h. mindestens ein thermoplastisches Olefin-Homo- oder Copolymer, gegebenenfalls modifiziert, sowie zusätzlich mindestens ein Polyester enthält. Die beiden äußeren Schichten 4, 5 bestehen beispielsweise zu 100% geschäumten oder ungeschäumten A-PET. Alternativ können die beiden äußeren Schichten 4, 5 auch verschieden ausgebildet sein, d.h. sowohl hinsichtlich ihrer Bestandteile als auch hinsichtlich der Verarbeitung, der Dicke, etc. Die Fig. 8a zeigt schematisch, dass die Schicht 3 mit ihrer Mischung aus Olefin-Homo- oder Copolymer und Polyester nichtgeschäumt ist, während die Schicht 3 entsprechend der Fig. 8b geschäumt ist. Die in den Fig. 8 gezeigten Folien können zudem mit einer oder mehreren weiteren Schichten coextrudiert und/oder mit einer oder mehreren weiteren Folien kaschiert sein, beispielsweise solchen, die Barrierefunktionen aufweisen. Hierzu zählen Schichten bzw. Folien mit EVOH und PA. Zudem ist es möglich, dass die erfindungsgemäße Folie (ggf. ebenfalls mit weiteren Schichten coextrudiert oder mit weiteren Folien kaschiert) als Oberfolie 16 für eine Lebensmittelverpackung ausgebildet ist. Auch können derartige erfindungsgemäße Folien sowohl in der Unter- als auch der Oberfolie eingesetzt werden. Auch können andere Behältnisse für Lebensmittel wie beschrieben ausgebildet sein, beispielsweise Becher oder Schlauchbeutel.

### Erfindungsgemäße Beispiele

### Beispiel 1:

Die Folie gemäß Beispiel 1 wies eine A-B-A Struktur mit drei Schichten, einen Aufbau 50 : 410 : 50, eine Gesamtdicke von 510 µm und ein Flächengewicht von 661 g/m² und damit eine mittlere Dichte von 1,296 g/cm³ auf:
Schicht A:
   - Mono A-PET mit einer mittleren Dichte von 1,34 g/cm³,
   - zugesetzt war ein Antiblockmittel in einer Konzentration von 1 %,
   - Dicke der Schicht A: 50 µm,
   - Flächengewicht der Schicht A: 67 g/m²;
Schicht B:
   - Mischung A-PET mit LDPE,
   - der A-PET-Anteil lag bei 78 Gew.-%, der PE-Anteil bei 20 Gew.-%,
   - Dichte des A-PET betrug 1,34 g/cm³, die Dichte des LDPE 0,92 g/cm³,
   - zugesetzt war als Farbpigment (in Form eines Farbbatches) ein Weißpigment (TiO₂) mit 2 Gew.-% und einer Dichte von 1,74 g/cm³,
   - Dicke der Schicht B: 410 µm,
   - Flächengewicht der Schicht B: 527 g/m², die mittlere Dichte lag bei 1,285 g/cm³.
Schicht A (beide Schichten A waren identisch):
   - Mono A-PET mit Antiblockmittel,
   - Dicke der Schicht A: 50 µm,
   - Flächengewicht der Schicht A: 67 g/m².

### Beispiel 2:

Die Folie gemäß Beispiel 2 entsprach in weiten Teilen derjenigen des Beispiels 1. Die beiden Schichten A waren zu denjenigen des Beispiels 1 identisch. Die Schicht B entsprach ebenfalls der Schicht B in Beispiel 1, allerdings mit dem Unterschied, dass der A-PET-Anteil 98 Gew.-% betrug und der LDPE-Anteil 2 Gew.-%. Ein Weißpigment oder andere Stoffe wurden nicht hinzugefügt.

### Beispiel 3 (nicht vermessen):

Die Folie gemäß Beispiel 3 entsprach in weiten Teilen derjenigen des Beispiels 1. Die beiden Schichten A waren zu denjenigen des Beispiels 1 identisch. Die Schicht B entsprach ebenfalls der Schicht B in Beispiel 1, allerdings mit dem Unterschied, dass der A-PET-Anteil 75 Gew.-% betrug, der PE-Anteil 22 Gew.-% und der Anteil an Weißpigment (TiO₂) 3 Gew.-%.

### Beispiel 4 (nicht vermessen):

Die Folie gemäß Beispiel 4 entsprach in weiten Teilen derjenigen des Beispiels 1. Die beiden Schichten A waren zu denjenigen des Beispiels 1 identisch. Die Schicht B entsprach ebenfalls der Schicht B in Beispiel 1, allerdings mit dem Unterschied, dass der A-PET-Anteil 99,5 Gew.-% betrug und der LDPE-Anteil 0,5 Gew.-%. Ein Weißpigment oder andere Stoffe wurden nicht hinzugefügt.

### Beispiel 5 (nicht vermessen): Kombinationsfolie oder integrierte Gleitschutzfolie

Die Folie gemäß Beispiel 4 wurde mit einer 230 µm dicken PE-HV-PA-HV-PE-Folie (5-Schicht-Folie) kaschiert. Die PE-PA-PE-Folie war völlig undurchlässig gegen UV-Strahlung und Strahlung sichtbaren Lichts (UV-Vis (Abk. für visible = sichtbares Licht) Transmission im Wellenlängenbereich 200 nm bis 800 nm unter 0,5 %).

### Beispiel 6 (nicht vermessen): Außenfoliensvstem eines Schlauchliners

Die (kaschierte) Folie aus Beispiel 5 mit einer Breite von 500 mm wurde an den beiden äußeren Längskanten mit einer ebenfalls 500 mm breiten 230 µm dicken PE-PA-PE-Folie derart gesiegelt, dass ein geschlossener Schlauch resultierte (Umfang ca. 1000 mm). Bei der Siegelung wurde die PE-Seite der Kombinationsfolie aus Beispiel 5 mit der PE-Seite der unkaschierten 230 µm dicken PE-PA-PE UV- und Lichtschutzfolie gesiegelt. Die PE-PA-PE-Folie war völlig undurchlässig gegen UV-Strahlung und Strahlung sichtbaren Lichts (UV-Vis Transmission im Wellenlängenbereich 200 nm bis 800 nm unter 0,5%).

Die Antiblockmittel in den vorgenannten Beispielen verhindern die Adhäsion der erfindungsgemäßen Folie an ein anderes Material. Antiblockmittel sind beispielsweise Feststoffe, die an der Kunststoffoberfläche eine Mikrorauhigkeit erzeugen und dadurch beim Aufeinanderlegen zweier Folien bzw. bei einer Relativbewegung der Folien zueinander eine hauchdünne Luftschicht als Trennschicht erzeugen. Im Falle einer Gleitfolie bzw. eines Preliners ist eine das Antiblockmittel enthaltende Außenschicht dem Einlegeschlauch zugewandt, wobei dann der Einlegeschlauch beim Ziehen über die im Rohr verlegte Gleitfolie bzw. den Preliner nicht an der dieser Außenschicht der Gleitfolie bzw. des Preliners anhaftet.

### Vergleichsbeispiele

### Vergleichsbeispiel V1:

Weißlich trübe handelsübliche HDPE-Folie (Monofolie), die bereits als Gleitfolie im Kanalsanierungsbereich eingesetzt wird; Herstellung mittels Cast-Extrusion; Dicke 500 µm. Material Hostalen ® GD 4755, Dichte 0,953 g/cm³.

### Vergleichsbeispiel V2:

Weißlich trübe handelsübliche HDPE-Folie (Monofolie); Herstellung mittels "Sheet Extrusion Process", d.h. Schlitzdüse mit Kalander zur Herstellung einer plattenförmigen Folie (sheet); Dicke 600 µm.

### Messergebnisse:

Es wurden sowohl Zugversuche als auch Weiterreißversuche mit den Beispielfolien B1 und B2 sowie mit den Vergleichsfolien V1 und V2 durchgeführt.

Die Proben wurden von Hand präpariert (Proben auf die Prüfmasse geschnitten) und vor der Prüfung bei Normklima 23°C und 50% relativer Luftfeuchtigkeit für 24 h gelagert.

Die Messung der Zugeigenschaften erfolgte nach der Norm DIN EN ISO 527 Teil 3. Die Zugfestigkeit σₘₐₓ einer Kunststofffolie wird in N/mm² angegeben. Die Bruchdehnung ε_{B} in % gibt an, wie weit die Folie bis zum Reißvorgang gedehnt werden kann.

Als Prüfgerät für die Zugversuche wurde eine Universalprüfmaschine Zwick/Roell Z020 im Modus "Makro 50 mm" mit einem Makrowegaufnehmer für die Messung des E-Moduls verwendet. Die Prüfung erfolgte an Streifen mit einer Länge von 140 mm und einer Breite von 15 mm bei einer Geschwindigkeit von 1 mm/min für das Zugmodul und einer Prüfgeschwindigkeit von 500 mm/min für die Zugfestigkeit. Die Vorkraft betrug 1 N, die maximale Kraft der Kraftmessdose 2500 N.

Die Messung der Weiterreißfestigkeit erfolgte nach der Norm DIN 53363 - Trapez. Unter der Reißkraft Fₘₐₓ in N wird die Kraft verstanden, die notwendig ist, um ein Kunststofffolienstück zu reißen.

Als Prüfgerät zur Messung der Weiterreißfestigkeit wurde die oben genannte Universalprüfmaschine Zwick/Roell Z020 im Modus "Traverse L 50 mm" mit einem Traverse-Wegaufnehmer verwendet. Die Prüfung erfolgte an Streifen mit einer Länge von 120 mm und einer Breite von 50 mit einer 25 mm Kerbe nach DIN 53363 - Trapez. Die Prüfgeschwindigkeit betrug 300 mm/min und die Geschwindigkeit des Zugmoduls ebenfalls 300 mm/min. Die Vorkraft war auf 1 N eingestellt.

Die Messung des Durchstoßwiderstands erfolgte nach der Norm DIN EN ISO 6603ff.

Als Prüfgerät zur Messung des Durchstoßwiderstandes wurde ein Fallbolzenprüfgerät Instron /CEAST 9350 verwendet. Die Probekörperabmessungen betrugen 60 x 60 mm². In der Auflagefläche ist eine kreisförmige Aussparung mit Durchmesser 40 mm für den Durchtritt des Bolzens, dessen Masse 5 kg betrug. Die Durchstoßgeschwindigkeit betrug 4,4 m/s. Es wurde der erfolgte Durchschlag bei 50% gemessen (Mittelwert aus mehreren Messungen).

Erläuterungen zu Tab. 1:
- Eₜ: E-Modul;
- Sigma (σ) x%: Spannung in N/mm² zu der jeweiligen Dehnung, hier im Bereich von 1% bis 25%;
- Sigma Y (σ_{Y}): Streckspannung (Yield-Punkt);
- Epsilon Y (ε_{Y}): Dehnung in % zu den Streckspannungen;
- Sigma M (σ_{M}): Maximalspannung (Zugfestigkeit) in N/mm²;
- Sigma M2 (σ_{M}2): Maximalkraft in N;
- Epsilon M (ε_{M}): Dehnung in % zur Maximalspannung;
- Sigma B (σ_{B}): Bruchspannung;
- Epsilon B (ε_{B}): Bruchdehnung in % zur Bruchspannung.

In der Tab. 1 sind die Messergebnisse der Zugversuche aufgeführt. Zur leichteren Orientierung sind in den Zeilen für V1 und V2 nachteilhafte Werte kursiv gedruckt. Besonders nachteilhafte Werte sind kursiv und fett wiedergegeben. In den Zeilen für B1 und B2 sind die besonders vorteilhaften Werte fett gedruckt.

Aus der Tab. 1 ist deutlich erkennbar, dass die herkömmlichen handelsüblichen Gleitfolien auf Basis HDPE (Vergleichsbeispiele V1 und V2) - verglichen mit den erfindungsgemäßen Folien B1 und B2 - schon bei geringer Zugspannung Sigma (σ) eine erhebliche Dehnung mit sich bringen. Eine Dehnung von 1% wird bei V1 in md (machine direction - Maschinenrichtung; jeweils erster Wert in den Zellen) schon mit einer Zugspannung von 15,6 N/mm² erreicht. Bei V2 wird dazu eine noch niedrigere Zugspannung von 10,1 N/mm² benötigt.

Hingegen findet sich bei den Beispielen B1 und B2 bei 1% Dehnung in Maschinenrichtung md eine deutlich höhere erforderliche Zugspannung um das 2 bis 3-fache (22,6 N/mm² bzw. 27,0 N/mm²) verglichen mit den Vergleichsfolien V1 und V2. Auch für die Zugspannung bei 2,5% Dehnung sind die Ergebnisse für B1 und B2 wesentlich vorteilhafter als für V1 und V2.

Die sehr große Dehnung bei V1 tritt zudem verstärkt in Maschinenrichtung md auf, was besonders nachteilig ist. Des Weiteren liegt die Dehnung am Yield-Punkt (Streckdehnung) in Maschinenrichtung md bei V1 bei 32,2% und bei V2 bei 11,0%. Die Dehnung beim Bruch in Maschinenrichtung md liegt bei V1 bei 62,6% und bei V2 bei 84,1%. Es fällt auf, dass die handelsübliche Folie V1 zudem noch besonders stark anisotrop ist, d.h. die Werte für die Maschinenrichtung md und die Querrichtung cd (cross direction, d.h. quer zur Maschinenrichtung md) unterscheiden sich im Zugversuch gravierend.

Hingegen liegt die Dehnung beim Bruch im Beispiel B1 lediglich bei 3,5% und im Beispiel B2 lediglich bei 3,6% in md. Die Dehnung am Yield-Punkt (Streckdehnung) liegt bei B1 nur bei 3,5% in md. Die Dehnung beim Bruch in Maschinenrichtung md liegt bei B1 lediglich bei 3,5% und bei B2 lediglich bei 3,6%. Die beiden Folien B1 und B2 weisen zudem eine nur sehr geringe Anisotropie in Maschinenrichtung md und Querrichtung cd auf.

Die erfindungsgemäßen Folien B1 und B2 benötigen also einerseits für eine Dehnung (von 1% bzw. 2.5%) deutlich mehr Zugspannung und damit höhere Zugkraft als die Vergleichsbeispiele V1 und V2, was für die Anwendung als Gleitfolie für die Einlegeschläuche (Schlauchliner) bei der grabenlosen Kanalsanierung sehr vorteilhaft ist. Dadurch bleibt die Gleitfolie im Fall von B1 und B2 unverändert an ihrem Ort und dehnt sich nicht, wenn der Einlegeschlauch durch den Kanal gezogen wird. Der "Ziehharmonika-Effekt" wird somit nahezu vollständig bis komplett vermieden, wenn an dem Einlegeschlauch nicht mehr gezogen wird, so dass sich das System nicht mehr zurückziehen kann, sobald die Zugkraft aufhört. Die erfindungsgemäßen Gleitfolien dienen daher als ideale "Führung" des Einlegeschlauchs in dem zu sanierenden Kanal.

Der Zugversuch zeigt somit, dass sich die erfindungsgemäßen Folien B1 und B2 praktisch kaum - weder in Querrichtung cd noch in der wichtigen Maschinenrichtung md - dehnen. Die Dehnung am Yield-Punkt Epsilon Y (ε_{Y}; Streckdehnung) liegt bei B1 nur bei ca. 1/10 der Dehnung, die für die Folie V1 ermittelt wurde. Gleiches gilt bei B1 und B2 für die Maximaldehnung Epsilon M (ε_{M}). Die Dehnung beim Bruch Epsilon B (εε_{B}) ist für die erfindungsgemäßen Folien B1 und B2 um ca. einen Faktor 20 geringer im Vergleich zu V1 und ca. einen Faktor 24 im Vergleich zu V2. Folglich bleiben die erfindungsgemäßen Folien B1 und B2 nahezu unverändert in ihrer Form und Dimension, wenn der auf der Gleitfolie gleitende Einlegeschlauch durch den Kanal gezogen wird. Die Folien widerstehen großen Krafteinwirkungen und sind robust. Sie eignen sich somit ideal für die Verwendung als Gleitfolie bzw. Preliner.

In der Tab. 2 sind die Messergebnisse der Weiterreißfestigkeitsversuche aufgeführt. Zur leichteren Orientierung sind wiederum in den Zeilen für V1 und V2 nachteilhafte Werte kursiv gedruckt. Besonders nachteilhafte Werte sind kursiv und fett wiedergegeben. In den Zeilen für B1 und B2 sind die besonders vorteilhaften Werte fett gedruckt.

Die Prüfung und der Vergleich der Weiterreißfestigkeit (WRF) der Beispiele B1 und B2 und Vergleichsbeispiele V1 und V2 ergeben folgendes Ergebnis: Wie schon beim Zugversuch benötigen die erfindungsgemäßen Folien B1 und B2 einen deutlich höheren Kraftaufwand, damit die Folie überhaupt gedehnt oder gerissen werden kann. Gerade in der Maschinenrichtung md ist dieser Aspekt für die Anwendung als Gleitfolie oder Preliner besonders wichtig, da der Einlegeschlauch üblicherweise in Maschinenrichtung md der Gleitfolie bzw. des Preliners durch das Rohr gezogen wird.

Folie V1 weist, wie schon beim Zugversuch zu erkennen war, eine deutliche Schwäche in Maschinenrichtung md auf, was ein weiteres Indiz für die Anisotropie dieser Folie ist. In Maschinenrichtung md liegt die Reißkraft nur bei 56 N und die Reißfestigkeit nur bei 2,2 N/mm². Etwas bessere Werte werden bei der handelsüblichen Folie V2 gefunden (171 N bzw. 5,7 N/mm²).

Im Gegensatz dazu weisen die erfindungsgemäßen Folien B1 und B2 mit den Mischungen von A-PET und LDPE in der Schicht B eine deutlich höhere Reißkraft (248 bzw. 197 N) und Reißfestigkeit (9,8 bzw. 9,9 N/mm²) in Maschinenrichtung md im Vergleich zu V1 und V2 auf. Die Reißfestigkeit der Folien B1 und B2 ist im Vergleich zu V1 in Maschinenrichtung md um den Faktor 4-5 höher und im Vergleich zu V2 etwa doppelt so hoch. Damit eignen sich die erfindungsgemäßen Folien bestens als Gleitfolie bzw. Preliner zum Einführen von Schlauchlinern im Zuge der grabenlosen Kanalsanierung.

In der Tab. 3 sind die Messergebnisse der Durchstoßfestigkeitsversuche aufgeführt. Zur leichteren Orientierung sind wiederum in den Zeilen für V1 und V2 nachteilhafte Werte kursiv gedruckt. In den Zeilen für B1 und B2 sind die besonders vorteilhaften Werte fett gedruckt.

Die handelsübliche Folie V1 besitzt eine maximale Durchstoßkraft Fₘₐₓ von 419,9 N und eine Durchschlagskraft Fₚ von 209,2 N. Diese Werte sind für die Anwendung als Gleitfolie für die Kanalsanierung eher zu gering, da die Gleitfolie bei der Kanalsanierung wegen eventueller Ecken und Kanten an den Kanalwänden eine Schutzfunktion gegenüber dem einzuführenden Einlegeschlauch hat. Im Fall der Vergleichsfolie V1 würde die Gleitfolie nur einen geringen Schutz bieten können, da sie mit relativ wenig Kraftaufwand selbst durchstoßen werden kann. Höhere Werte werden sowohl bei Vergleichsbeispiel V2 (wobei die Dicke 600 µm ist) als auch bei Beispiel B2 (bei Dicke 500 µm) erhalten. Diese Folien sind für die Anwendung als Gleitfolie weitaus besser geeignet als die Folie aus V1.

Besonders deutlich zeigt sich in der Tab. 3 der günstige Einfluss einer erhöhten Menge an Polyethylen zu der auf Polyester basierenden Folie in Beispiel B1. Während bei der Folie aus Beispiel B2 2 Gew.-% PE neben 98 Gew.-% A-PET in der Mittelschicht B enthalten sind und eine maximale Durchstoßkraft von 520,54 N erreicht wird, führt die Zugabe von 20 Gew.-% Polyethylen neben 78 Gew.-% A-PET in der Mittelschicht B zu einer deutlichen Erhöhung der Durchstoßkraft auf 601,22 N. Damit ist die erfindungsgemäße Folie aus B1 einerseits besonders durchstoßfest und andererseits (s. Tab. 1 und 2) robust.

**Tab. 1: Zugversuch in md (machine direction - Maschinenrichtung) / cd (cross direction - Querrichtung)**

| Name | Eₜ | σ_{x1%} | σ_{x2,5%} | σ_{x5%} | σ_{x10%} | σ_{x25%} | σ_{Y} | ε_{Y} | σ_{M} | σ_{M} 2 | ε_{M} | σ_{B} | ε_{B} |
|---|---|---|---|---|---|---|---|---|---|---|---|---|---|
| Einheit | N/mm² | N/mm² | N/mm² | N/mm² | N/mm² | N/mm² | N/mm² | % | N/mm² | N | % | N/mm² | % |
| V1 | 1240/1760 | 15,6/18,5 | *30,6*/*30,8* | 40,9/30,4 | 49,1/19,4 | 54/- | 54,3/33,9 | ***32,2***/*4,5* | 54,3/33,9 | 409,3/255,0 | ***32,2***/*4,5* | 46,7/21,2 | ***62,6***/10,9 |
| V2 | 844/1050 | ***10,1*/*12,1*** | ***18,4*/*21,4*** | 23,4/27,1 | 25,4/28,6 | 24,7/17,7 | 25,4/28,6 | *11,0*/*8,7* | 25,4/28,6 | 230/261 | *10,8*/*8,7* | 19,1/16,4 | ***84,1***/47,4 |
| | | | | | | | | | | | | | |
| B1 | **2350/2240** | **22,6/22,0** | **47,8/46,5** | 43,5/27,4 | -/- | -/- | -/- | **3,5/3,4** | 54,3/51,7 | -/- | **3,5/3,4** | 25,4/37,3 | **3,5/3,4** |
| B2 | 2800/2620 | **27,0/25,8** | **58,2/55,6** | -/- | -/- | -/- | -/- | -/- | **68,4/64,7** | 412/394 | **3,5/3,3** | 67,2/64 | **3,6/3,3** |

**Tab. 2: Weiterreißfestigkeit (WRF) in md/cd**

| Name | F_{1%} | F _{2,5%} | F _{5%} | F _{10%} | F _{25%} | F _{30%} | Reißkraft | Reißfestigkeit |
|---|---|---|---|---|---|---|---|---|
| Einheit | N | N | N | N | N | N | N | N/mm² |
| V1 | 1,9/1,5 | 3,9/2,8 | 9,6/6,1 | 27,9/25,6 | 37,9/230 | *30,1*/300 | ***56,0***/497 | ***2,2***/19,9 |
| V2 | 2,1/1,9 | 4,3/4,0 | *10,5*/10,0 | *34,1*/39,6 | 139/195 | 156/238 | 171/297 | *5,7*/9,9 |
| | | | | | | | | |
| B1 | **2,5/2,5** | **5,7/5,5** | **14,6/13,8** | **51,3/48,4** | **179**/174 | **214**/208 | **248**/251 | **9,8**/9,9 |
| B2 | **2,2/2,1** | **4,8/4,6** | **12,8/11,9** | **47,2/45,6** | **148**/158 | **175**/187 | **197**/219 | 9,9/11,0 |

**Tab. 3: Durchstoßfestigkeit in md/cd**

| Name | Maximale Durchstoßkraft Fₘₐₓ | Durchschlagskraft Fₚ |
|---|---|---|
| Einheit | N | N |
| V1 | *419,9* | *209,2* |
| V2 | 525,5 | 262,6 |
| | | |
| B1 | **601,22** | **294,3** |
| B2 | 520,54 | 259,3 |

## Patentansprüche

1. Ein- oder mehrschichtige Folie, wobei die Folie (1; 2; 11) zwei Außenschichten (4, 5) und mindestens eine innenliegende Schicht (3) umfasst, die mindestens ein thermoplastisches Olefin-Homo- oder Copolymer aus der Gruppe umfassend Polyethylen, insbesondere LDPE oder HDPE, Polypropylen, Polybutylen, Polyisobutylen oder Mischungen aus wenigstens zwei der genannten Polymere und mindestens ein Polyester enthält, **dadurch gekennzeichnet, dass** das mindestens eine Polyester in der innenliegenden Schicht (3) amorph ist, insbesondere in Form von amorphem Polyethylenterephthalat (A-PET), und dass in einer oder beiden Außenschichten (4, 5) entweder Polyester alleine oder eine Mischung aus Polyester und Polyolefin vorhanden ist.

2. Folie nach Anspruch 1, **dadurch gekennzeichnet, dass** die besagte mindestens eine innenliegende Schicht (3) mehr als 50 Gew.-% an thermoplastischem Olefin-Homo- oder Copolymers und 0,1 bis 50 Gew.-% an Polyester enthält.

3. Folie nach Anspruch 1, **dadurch gekennzeichnet, dass** die besagte mindestens eine innenliegende Schicht (3) mehr als 50 Gew.-% an Polyester und 0,1 bis 50 Gew.-%, vorzugsweise zwischen 10 Gew.-% und 35 Gew.-%, an thermoplastischem Olefin-Homo- oder Copolymer enthält.

4. Folie nach einem oder mehreren der vorherigen Ansprüche, **dadurch gekennzeichnet, dass** das mindestens eine Polyester in der mindestens einen innenliegenden Schicht (3), insbesondere als A-PET vorliegend, zu mehr als 25 Gew.-%, bevorzugt zu mehr als 40 Gew.-% und besonders bevorzugt zu mehr als 50 Gew.-%, insbesondere zu mehr als 65 Gew.-%, in der besagten innenliegenden Schicht (3) gemäß Anspruch 1 enthalten ist.

5. Folie nach einem oder mehreren der vorherigen Ansprüche, **dadurch gekennzeichnet, dass** das mindestens eine Olefin-Homo- oder Copolymer Polyethylen (PE) in der mindestens einen innenliegenden Schicht (3), vorzugsweise vorliegend als Low Density Polyethylen (LDPE), Metallocen Low Density Polyethylen (mLDPE), Linear Low Density Polyethylen (LLDPE), Very Low Density Polyethylen (VLDPE), Medium Density Polyethylen (MDPE) und/oder High Density Polyethylen (HDPE), und/oder Polypropylen (PP) ist.

6. Folie nach einem oder mehreren der vorherigen Ansprüche, **dadurch gekennzeichnet, dass** die Folie (1; 2; 11) zusätzlich mindestens eine Zwischenschicht aufweist.

7. Folie nach einem oder mehreren der vorherigen Ansprüche, **dadurch gekennzeichnet, dass** die Folie (1; 2; 11) eine Dicke von 20 bis 2000 µm, besonders bevorzugt von 50 bis 1500 µm, ganz besonders bevorzugt von 100 bis 1000 µm, insbesondere von 200 bis 900 µm, aufweist.

8. Folie nach einem oder mehreren der vorherigen Ansprüche, **dadurch gekennzeichnet, dass** die Folie (1; 2; 11) mindestens eine eigenständige Barriereschicht gegen den Durchtritt von Gasen und/oder chemischen Substanzen aufweist, vorzugsweise auf der Basis von Ethylenvinylalkohol (EVOH) oder Polyamid (PA) oder beiden und weiter bevorzugt jeweils zu 100% aus diesen Verbindungen.

9. Folie nach einem oder mehreren der vorherigen Ansprüche, **dadurch gekennzeichnet, dass** die Folie (1; 2; 11) eine eigenständige Schicht aufweist, die mindestens eine als Barriere gegen den Durchtritt von chemischen Substanzen, vorzugsweise gegen Monomere, wirkende chemische Verbindung, vorzugsweise Polyamid (PA), und/oder mindestens eine als Barriere gegen UV-Licht und sichtbares Licht wirkende chemische Verbindung enthält, so dass eine Transmission von Strahlung im Wellenlängenbereich von 350 bis 450 nm zumindest weitgehend unterbunden wird.

10. Folie nach einem oder mehreren der vorherigen Ansprüche, **dadurch gekennzeichnet, dass** ein oder mehrere der folgenden Stoffe in der besagten mindestens einen innenliegenden Schicht (3) gemäß Anspruch 1 enthalten sind: Polystyrol (PS); Polyhalogenide, wie z.B. PVC und/oder Polyvinylidenchlorid (PVdC); Polyamid (PA); Ethylenvinylalkohol Copolymer (EVOH), Polyvinylalkohol (PVOH oder PVAL), Haftvermittler, Ethylenvinylacetat (EVAc); ein oder mehrere Ionomere; ein oder mehrere Poly(Meth)acrylate; Ethylen-haltige Poly(meth)acrylate, Polyvinylacetat (PVAc); Polycarbonat (PC); Polyacrylnitril (PAN); weitere Polyester wie Polybutylenterephthalat (PBT), Polyethylennaphthalat (PEN), Polymilchsäure (PLA) und/oder Polyhydroxyalkanoate (PHA); ein oder mehrere Ethylenacrylsäure-Copolymere (EAA); Polyvinylbutyral (PVB); Polyvinylacetal; Celluloseacetat (CA); Celloloseacetobutyrat (CAB); Polysaccharide; Stärke; zyklisches Olefin-Copolymer (COC).

11. Folie nach einem oder mehreren der vorherigen Ansprüche, **dadurch gekennzeichnet, dass** im Zuge der Extrusion in einer oder in mehreren Schichten (3, 4, 5) folgende Stoffe zugegeben sind: Haftvermittler, funktionalisiertes Polymer wie z.B. EVOH, optische Aufheller, thermische Stabilisatoren, Gleitmittel, Antioxidantien, Oxygen scavenger, Abstandshalter (z.B. Silica-Partikel, SAS), Slip-/Antiblockmittel, Farben, Pigmente, Schäumungsmittel, Antistatika, Prozesshilfsmittel, Lubricating Agents, Flammschutzmittel, Flammhemmer, Impact Modifier, Schlagzähverbesserer, Anti-Hydrolysemittel, UV-Absorber, UV-Schutzmittel, Stabilisatoren, Antifog-Additive, Wachse, Wachsadditive, Trennmittel, Siegel- oder Peel-Additive, Nukleierungsmittel, Combatibilizer (Verträglichkeitsmacher), Fließmittel, Fließverbesserer, Melt Strength Enhancer, Molekulargewichtserhöher, Vernetzer oder Weichmacher.

12. Folie nach einem oder mehreren der vorherigen Ansprüche, **dadurch gekennzeichnet, dass** eine oder mehrere Schichten (3, 4, 5) der Folie (1; 2; 11), einschließlich der besagten mindestens einen innenliegenden Schicht (3) gemäß Anspruch 1, geschäumt sind.

13. Folienkombination mit einer Folie nach einem oder mehreren der vorherigen Ansprüche, **dadurch gekennzeichnet, dass** mindestens eine zusätzliche Folie (6; 6') auf die besagte Folie (1; 2; 11) nach einem oder mehreren der vorhergehenden Ansprüche aufgebracht ist, vorzugsweise aufkaschiert.

14. Folienkombination nach dem vorherigen Anspruch, **dadurch gekennzeichnet, dass** die zusätzliche Folie (6; 6') eine Lichtschutzfolie, vorzugsweise eine UV- und Lichtschutzfolie, ist.

15. Folienkombination nach einem der beiden vorherigen Ansprüche, **dadurch gekennzeichnet, dass** die zusätzliche Folie (6; 6') mindestens eine chemische Verbindung zur Erzielung einer Barriere gegenüber Monomeren wie z.B. Styrol, Ölen und/oder Fetten enthält.

16. Folienkombination nach einem der drei vorhergehenden Ansprüche, **dadurch gekennzeichnet, dass** die zusätzliche Folie (6') auf eine als an den Längskanten offene Gleitfolie (2) nach einem der vorhergehenden Ansprüche aufkaschiert ist, wobei eine weitere Folie (6"), die wie die aufkaschierte zusätzliche Folie (6') aufgebaut sein kann, an ihren Längskanten mit den Längskanten der Gleitfolie (2) oder der aufkaschierten zusätzlichen Folie (6') verbunden ist, vorzugsweise versiegelt.

17. Verbund aus einer Folienkombination nach einem der vier vorhergehenden Ansprüche sowie zumindest einem harzgetränkten Trägersystem (8) und einer inneren Folie (9) mit der Reihenfolge: a) Folie (1; 2) nach einem der Ansprüche 1 bis 16, b) mindestens eine aufkaschierte Folie (6; 6'), vorzugsweise eine UV- und Licht-Schutzfolie, c) harzgetränktes Trägersystem (8), d) innere Folie (9).

18. Verwendung einer Folie oder Folienkombination nach einem der vorhergehenden Ansprüche in der Rohrsanierung mittels Schlauchlining-Technik als Gleitfolie (2) oder als Preliner (1) zur Anlage an der Innenwand eines zu sanierenden, unterirdisch verlegten Rohres, vorzugsweise einem Kanalrohr (K), damit ein Einlegeschlauch (7) mit einem aushärtbaren Trägermaterial (8) auf der im Rohr verlegten Gleitfolie (2) bzw. dem Preliner (1) gleitend durch das Rohr gezogen werden kann.

19. Verwendung einer Folie (11) oder Folienkombination nach einem der vorhergehenden Ansprüche als Verpackungsmaterial (15, 16) für Lebensmittel oder für den sog. Non-Food-Bereich, als Außenverkleidung, als außenliegende Abdeckung von Gebäudeteilen, in Schutzanzügen, für Schilder sowie Anzeigetafeln, für Displays oder als Isoliermaterial.

## Claims

1. One- or multilayered film, wherein the film (1;2;11) comprises two outer layers (4,5) and at least one inner layer (3) that contains at least one thermoplastic olefin homo or co-polymer selected from the group consisting of poly ethylene, in particular LDPE or HDPE, polypropylene, polybutylene, polyisobutylene or mixtures of at least two of the said polymers and at least one polyester, **characterized in that** the at least one polyester in the inner layer (3) is amorphous, in particular in the form of amorphous polyethylene terephthalate (A-PET), and that in one or both of the outer layers (4,5) either polyester alone or a mixture of polyester and polyolefin is present.

2. Film according to claim 1, **characterized in that** said at least one inner layer (3) contains more than 50% by weight of thermoplastic olefin homo or copolymer and 0.1 to 50% by weight of polyester.

3. Film according to claim 1, **characterized in that** said at least one inner layer (3) contains more than 50% by weight of polyester and 0.1 to 50% by weight, preferably between 10% and 35% by weight, of thermoplastic olefin homo or copolymer.

4. Film according to one or several of the preceding claims, **characterized in that** the at least one polyester in the at least one inner layer (3), especially present in form of amorphous polyethylene terephthalate (A-PET), is contained in said inner layer (3) in accordance with claim 1 in more than 25% by weight, preferably in more than 40% by weight and very preferably in more than 50% by weight, particularly in more than 65% by weight.

5. Film according to one or several of the preceding claims, **characterized in that** the at least one olefin homo or copolymer polyethylene (PE) in the at least one inner layer (3) is preferably present as low density polyethylene (LDPE), metallocen low density polyethylene (mLDPE), linear low density polyethylene (LLDPE), very low density polyethylene (VLDPE), medium density polyethylene (MDPE) and/or high density polyethylene (HDPE), and/or polypropylene (PP).

6. Film according to one or several of the preceding claims, **characterized in that** the film (1; 2; 11) additionally comprises at least one intermediate layer.

7. Film according to one or several of the preceding claims, **characterized in that** the film (1; 2; 11) has a thickness of 20 to 2000 µm, especially preferable of 50 to 1500 µm, very especially preferable from 100 to 1000 µm, in particular of 200 to 900 µm.

8. Film according to one or several of the preceding claims, **characterized in that** the film (1; 2; 11) has at least one independent barrier layer against the penetration of gases and/or chemical substances, preferably on the basis of ethylene vinyl alcohol (EVOH) or polyamide (PA) or both, and more preferably in each case up to 100% of these compounds.

9. Film according to one or several of the preceding claims, **characterized in that** the film (1; 2; 11) comprises an independent layer that has at least one chemical compound, preferably polyamide (PA), acting as barrier against the penetration of chemical substances, preferably against monomers, and/or at least one chemical compound acting as a barrier against UV light and visible light, so that a transmission of radiation in the wavelength range from 350 to 450 nm is at least substantially prevented.

10. Film according to one or several of the preceding claims, **characterized in that** one or several of the following substances are contained in said at least one inner layer (3) according to claim 1: polystyrene (PS); poly- halogenides such as PVC and/or polyvinylidene chloride (PVdC), for example; polyamide (PA); ethylene vinyl alcohol copolymer (EVOH), polyvinyl alcohol (PVOH or PVAL), adhesion promoters, ethylene vinylacetate (EVAc); one or several ionomers; one or several poly(meth)acrylates; poly(meth)acrylates containing ethylene, polyvinyl acetate (PVAc); polycarbonate (PC); poly-acrylnitrile (PAN); other polyesters such as polybutylene terephthalate (PBT), polyethylene naphthalate (PEN), polylactic acid (PLA) and/or polyhydroxy-alkanoates (PHA); one or several ethylene acrylic acid copolymers (EAA); polyvinyl butyral (PVB); polyvinyl acetal; cellulose acetate (CA); cellulose acetobutyrate (CAB); polysaccharides; starch; cyclic olefin copolymer (COC).

11. Film according to one or several of the preceding claims, **characterized in that** the following substances are added in one or several layers (3, 4, 5) during the course of the extrusion: adhesive promoters, functionalized polymers such as EVOH, optical brighteners, thermal stabilizers, slip agents, antioxidants, oxygen scavengers, spacers (e.g. silica particles, SAS), slip/antiblocking agents, colors, pigments, foaming agents, antistatic agents, process aids, lubricating agents, flame retardants, flame inhibitors, impact modifiers, impact resistance improvers, anti-hydrolysis agents, UV absorbers, UV protection agents, stabilizers, antifogging additives, waxes, wax additives, release agents, sealing or peeling additives, nucleating agents, compatibilizers, flow agents, flow improvers, melt strength enhancers, molecular weight increasers, cross-linkers or softeners.

12. Film according to one or several of the preceding claims **characterized in that** one or several layers (3, 4, 5) of the film (1; 2; 11), including said at least one inner layer (3) according to claim 1, are foamed.

13. Film combination with a film according to one or several of the preceding claims, **characterized in that** at least one additional film (6; 6') is applied, preferably laminated, on said film (1; 2; 11) according to one or several of the preceding claims.

14. Film combination according to the previous claim, **characterized in that** the additional film (6; 6') is a light protection film, preferably a UV and light protection film.

15. Film combination according to one of the two preceding claims, **characterized in that** the additional film (6; 6') contains at least one chemical compound for creating a barrier against monomers such as styrene, oils and/or fats.

16. Film combination according to one of the three preceding claims, **characterized in that** the additional film (6') is laminated on a sliding film (2) open along the longitudinal edges according to one of the preceding claims, wherein another film (6") that can have the same structure as the laminated additional film (6') is joined on its longitudinal edges to the longitudinal edges of the sliding foil (2) or the laminated additional film (6') and is preferably sealed.

17. Composite consisting of a film combination according to one of the four preceding claims and at least one resin-impregnated carrier system (8) and an inner film (9) with the following order: a) film (1; 2) according to one of the claims 1 through 16, b) at least one laminated film (6; 6'), preferably an UV and light protective film, c) resin-impregnated carrier system (8), d) inner film (9).

18. Use of a film or film combination according to one of the preceding claims in pipe renovation that uses tube lining technology as sliding film (2) or as preliner (1) for abutment to the inner wall of a pipe laid underground to be renovated, preferably a sewer pipe (K), so that an insertion tube (7) with a curable carrier material (8) can be pulled through the pipe in sliding fashion over the sliding film (2) or preliner (1) laid on the pipe.

19. Use of a film (11) or a film combination according to one of the previous claims as packaging material (15, 16) for food or the so-called non-food sector, as outer covering, as external covering of building sections, in protective suits, for signs and scoreboards, for displays or as insulating material.

## Revendications

1. Feuille à une ou plusieurs couche(s), dans laquelle la feuille (1 ; 2 ; 11) comprend deux couches extérieures (4, 5) et au moins une couche intérieure (3) qui contient au moins un homopolymère ou copolymère d'oléfine thermoplastique issu du groupe comprenant le polyéthylène, en particulier le LDPE ou le HDPE, le polypropylène, le polybutylène, le polyisobutylène ou des mélanges d'au moins deux des polymères nommés et au moins un polyester, **caractérisée en ce que** le, au moins un, polyester est amorphe dans la couche intérieure (3), en particulier sous forme de polyéthylène téréphtalate amorphe (A-PET), et **en ce que** soit le polyester seul, soit un mélange de polyester et de polyoléfine est présent dans l'une ou les deux couches extérieures (4, 5).

2. Feuille selon la revendication 1, **caractérisée en ce que** ladite, au moins une, couche intérieure (3) contient plus de 50 % en poids d'homopolymère ou copolymère d'oléfine thermoplastique et 0,1 à 50 % en poids de polyester.

3. Feuille selon la revendication 1, **caractérisée en ce que** ladite, au moins une, couche intérieure (3) contient plus de 50 % en poids de polyester et 0,1 à 50 % en poids, de préférence entre 10 % en poids et 35 % en poids d'homopolymère ou copolymère d'oléfine thermoplastique.

4. Feuille selon l'une quelconque ou plusieurs des revendications précédentes, **caractérisée en ce que** le, au moins un, polyester dans la, au moins une, couche intérieure (3), en particulier présent sous forme de A-PET, est présent dans ladite couche intérieure (3) selon la revendication 1 à plus de 25 % en poids, de préférence à plus de 40 % en poids et, de manière particulièrement préférée, à plus de 50 % en poids, en particulier à plus de 65 % en poids.

5. Feuille selon l'une quelconque ou plusieurs des revendications précédentes, **caractérisée en ce que** le, au moins un, homopolymère ou copolymère d'oléfine est du polyéthylène (PE) dans la, au moins une, couche intérieure (3), présent de préférence sous forme de polyéthylène à basse densité (PEBD), de polyéthylène à basse densité métallocène (mLDPE), de polyéthylène à basse densité linéaire (LLDPE), de polyéthylène à très basse densité (VLDPE), de polyéthylène à moyenne densité (MDPE) et/ou de polyéthylène à haute densité (HDPE), et/ou du polypropylène (PP).

6. Feuille selon l'une quelconque ou plusieurs des revendications précédentes, **caractérisée en ce que** la feuille (1 ; 2 ; 11) présente additionnellement au moins une couche intermédiaire.

7. Feuille selon l'une quelconque ou plusieurs des revendications précédentes, **caractérisée en ce que** la feuille (1 ; 2 ; 11) présente une épaisseur de 20 à 2 000 µm, de manière particulièrement préférée de 50 à 1 500 µm, de manière tout particulièrement préférée de 100 à 1 000 µm, en particulier de 200 à 900 µm.

8. Feuille selon l'une quelconque ou plusieurs des revendications précédentes, **caractérisée en ce que** la feuille (1 ; 2 ; 11) présente au moins une couche barrière autonome contre la traversée de gaz et/ou de substances chimiques, de préférence à base d'éthylène alcool vinylique (EVOH) ou de polyamide (PA) ou des deux et, en outre, de préférence, à 100% de chacun de ces composés.

9. Feuille selon l'une quelconque ou plusieurs des revendications précédentes, **caractérisée en ce que** la feuille (1 ; 2 ; 11) présente une couche autonome qui contient au moins un composé chimique, de préférence du polyamide (PA), agissant en tant que barrière contre la traversée de substances chimiques, de préférence de monomères, et/ou au moins un composé chimique agissant en tant que barrière contre la lumière ultraviolette et la lumière visible, de sorte qu'une transmission de rayonnement dans la gamme de longueurs d'onde de 350 à 450 nm soit moins largement empêchée.

10. Feuille selon l'une quelconque ou plusieurs des revendications précédentes, **caractérisée en ce qu'**une ou plusieurs des substances suivantes est/sont contenue(s) dans ladite au moins une couche intérieure (3) selon la revendication 1 : polystyrène (PS) ; polyhalogénures, tels que, par ex. CPV et/ou chlorure de polyvinylidène (PVdC) ; polyamide (PA) ; copolymère éthylène-alcool vinylique (EVOH), alcool polyvinylique (PVOH ou PVAL), promoteur d'adhérence, éthylène-acétate de vinyle (EVAc) ; un ou plusieurs ionomères ; un ou plusieurs polyméthacrylates ; polyméthacrylates contenant de l'éthylène, acétate de polyvinyle (PVAc) ; polycarbonate (PC) ; polyacrylonitrile (PAN) ; d'autres polyesters tels que le téréphtalate de polybutylène (PBT), naphtalate de polyéthylène (PEN), l'acide polylactique (PLA) et/ou le polyhydroxyalkanoate (PHA) ; un ou plusieurs copolymères d'éthylène-acide acrylique (EAA) ; polyvinyle de butyral (PVB) ; polyvinylacétal ; acétate de cellulose (CA) ; acétobutyrate de cellulose (CAB) ; polysaccharides ; amidon ; copolymère oléfinique cyclique (COC).

11. Feuille selon l'une quelconque ou plusieurs des revendications précédentes, **caractérisée en ce que** les substances suivantes sont ajoutées dans une ou plusieurs couches (3, 4, 5) au cours de l'extrusion : promoteurs d'adhérence, polymère fonctionnalisé tel que l'EVOH, azurants optiques, stabilisateurs thermiques, agents de glisse, antioxydants, désoxygénant, espaceurs (par ex. particules de silice, SAS), agents de glissement/anti-blocage, peintures, pigments, agents moussants, agents antistatiques, adjuvants de processus, agents lubrifiants, retardateurs de flamme, agents ignifuges, agents antichoc, améliorateur de résistance aux chocs, agents anti-hydrolyse, absorbant d'UV, agents de protection contre les UV, stabilisants, additifs antibuée, cires, additifs à base de cire, antiagglomérants, additifs d'étanchéité ou de pelage, agents de nucléation, compatibilisant (agent de compatibilité), agents fluidifiants, améliorateurs de fluidité, renforçateurs de la résistance à la fusion, agents d'augmentation du poids moléculaire, agents de réticulation ou plastifiants.

12. Feuille selon l'une quelconque ou plusieurs des revendications précédentes, **caractérisée en ce qu'**une ou plusieurs couches (3, 4, 5) de la feuille (1 ; 2 ; 11), y compris ladite, au moins une, couche intérieure (3) selon la revendication 1, est/sont expansée(s) par moussage.

13. Combinaison de feuilles avec une feuille selon l'une quelconque ou plusieurs des revendications précédentes, **caractérisée en ce qu'**au moins une feuille supplémentaire (6 ; 6') est appliquée, de préférence contre-collée, sur ladite feuille (1 ; 2 ; 11) selon l'une quelconque ou plusieurs des revendications précédentes.

14. Combinaison de feuilles selon la revendication précédente, **caractérisée en ce que** la feuille supplémentaire (6 ; 6') est une feuille de protection contre la lumière, de préférence une feuille de protection contre les UV et la lumière.

15. Combinaison de feuilles selon l'une quelconque des deux revendications précédentes, **caractérisée en ce que** la feuille supplémentaire (6 ; 6') contient au moins un composé chimique destiné à créer une barrière contre les monomères tels que le styrène, les huiles et/ou les graisses.

16. Combinaison de feuilles selon l'une quelconque des trois revendications précédentes, **caractérisée en ce que** la feuille supplémentaire (6') est contre-collée sur une feuille glissante (2) en tant que feuille ouverte sur les rives longitudinales selon l'une quelconque des revendications précédentes, dans laquelle une feuille supplémentaire (6"), qui peut être structurée comme la feuille supplémentaire contre-collée (6'), est relié par ses rives longitudinales aux rives longitudinales de la feuille glissante (2) ou de la feuille supplémentaire contre-collée (6'), de préférence scelle celle-ci.

17. Composé d'une combinaison de feuilles selon l'une quelconque des quatre revendications précédentes ainsi que d'au moins un système de support (8) imprégné de résine et d'une feuille intérieure (9), avec la succession suivante : a) feuille (1 ; 2) selon l'une quelconque des revendications 1 à 16, b) au moins une feuille contre-collée (6 ; 6'), de préférence une feuille de protection contre les UV et la lumière, c) système de support (8) imprégné de résine, d) feuille intérieure (9).

18. Utilisation d'une feuille ou d'une combinaison de feuilles selon l'une quelconque des revendications précédentes dans le cadre de la réhabilitation de conduits à l'aide de la technique de gainage de tubes en tant feuille glissante (2) ou en tant que pré-gaine (1) pour l'application sur la paroi intérieure d'un conduit à réhabiliter posé sous terre, de préférence un conduit de canalisation (K), afin qu'un tuyau de chemisage (7) avec un matériau de support (8) durcissable puisse être tiré à travers le conduit par glissement sur la feuille glissante (2) ou la pré-gaine (1) posé dans le conduit.

19. Utilisation d'une feuille (11) ou d'une combinaison de feuilles selon l'une quelconque des revendications précédentes en tant que matériau d'emballage (15, 16) pour des denrées alimentaires ou pour le secteur dit non alimentaire, en tant qu'habillage extérieur, en tant revêtement extérieur de parties de bâtiments, dans des combinaisons de protection, pour des enseignes ainsi que des panneaux d'affichage, pour des présentoirs ou en tant que matériau isolant.
